(19) Europäisches Patentamt
European Patent Office
Office européen des brevets

(11) **EP 4 283 907 A1**

(12) **EUROPEAN PATENT APPLICATION**
published in accordance with Art. 153(4) EPC

(43) Date of publication:
**29.11.2023 Bulletin 2023/48**

(21) Application number: **22755537.2**

(22) Date of filing: **15.02.2022**

(51) International Patent Classification (IPC):
**H04L 5/00** *(2006.01)*

(52) Cooperative Patent Classification (CPC):
**H04L 5/00; H04W 72/04**

(86) International application number:
**PCT/CN2022/076349**

(87) International publication number:
**WO 2022/174764 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 CN 202110189750**

(71) Applicant: **Huawei Technologies Co., Ltd.**
**Shenzhen, Guangdong 518129 (CN)**

(72) Inventors:
• JIN, Lili
  Shenzhen, Guangdong 518129 (CN)
• WANG, Jian
  Shenzhen, Guangdong 518129 (CN)
• CHENG, Xingqing
  Shenzhen, Guangdong 518129 (CN)

(74) Representative: **Körber, Martin Hans**
**Mitscherlich PartmbB**
**Patent- und Rechtsanwälte**
**Karlstraße 7**
**80333 München (DE)**

(54) **RESOURCE MAPPING METHOD AND APPARATUS**

(57) Embodiments of this application provide a resource mapping method and apparatus, applied to the field of short-range communication. The method includes: determining a first mapping mode in a plurality of mapping modes, where the plurality of mapping modes further include a second mapping mode; and mapping, by the first mapping mode, a first modulation symbol sequence carried in a first time unit. A plurality of modulation symbols in the first modulation symbol sequence are mapped to a plurality of subcarriers by the first mapping mode. Each subcarrier is used to map one modulation symbol. The first mapping mode and the second mapping mode represent different mapping locations of the plurality of modulation symbols on the plurality of subcarriers. According to embodiments of this application, impact of frequency selective fading on data transmission efficiency can be reduced, a diversity gain can be improved, and a quantity of retransmission times and a data transmission delay can be reduced. The resource mapping method and apparatus may be applied to industries such as smart vehicles, smart home, and smart manufacturing.

FIG. 4

## Description

This application claims priority to Chinese Patent Application No. 202110189750.8, filed with the China National Intellectual Property Administration on February 19, 2021 and entitled "RESOURCE MAPPING METHOD AND APPARATUS", which is incorporated herein by reference in its entirety.

## TECHNICAL FIELD

The present invention relates to the field of communication technologies and the field of internet of vehicles, and in particular, relates to the field of short-range wireless communication technologies, for example, cockpit domain communication, and communication in smart home and smart manufacturing scenarios. Specifically, the present invention relates to a resource mapping method and apparatus.

## BACKGROUND

In a wireless communication process, a resource element (Resource Element, RE) is usually a resource of a minimum granularity in physical resources, corresponds to a subcarrier in frequency domain, and corresponds to a symbol (symbol) in time domain. For example, in an LTE system, a bandwidth of an RE is 15 kHz. A resource block (Resource Block) is a resource granularity obtained by combining a plurality of REs.

In a frequency domain resource allocation process, a frequency domain resource may be allocated as a virtual resource block (virtual resource block, VRB), and there is a mapping relationship between an RB in the VRB and a physical resource block (physical resource block, PRB). During data transmission, data is modulated to obtain a plurality of modulation symbols, the modulation symbols are mapped to the VRB, and then an RB used to transmit a specific segment of modulation symbol is determined based on a correspondence between a VRB and a PRB.

In the wireless communication process, a signal arrives at a receiver through a plurality of paths, and multipath signal superposition causes inconsistent channel fading coefficients corresponding to different frequencies, that is, frequency domain selective fading. How to reduce impact of frequency domain selective fading on signal transmission and improve a diversity gain on a fading channel is a technical problem that urgently needs to be resolved.

## SUMMARY

Embodiments of this application disclose a resource mapping method and apparatus, to reduce impact of frequency domain selective fading on signal transmission and improve a diversity gain on a fading channel.

According to a first aspect, an embodiment of this application discloses a resource mapping method, including:

determining a first mapping mode in a plurality of mapping modes, where the plurality of mapping modes further include a second mapping mode; and
mapping, in the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In this embodiment of this application, when a modulation symbol sequence is mapped, a mapping mode may be determined from the plurality of mapping modes, thereby improving resource mapping flexibility. Because the first mapping mode and the second mapping mode represent mapping the plurality of modulation symbols to different subcarrier locations, when channel quality on a specific frequency band is poor, subcarrier locations to which the modulation symbols are mapped may be changed in different mapping modes, to reduce impact of frequency selective fading on data transmission efficiency, improve a diversity gain on a fading channel, and reduce a quantity of retransmission times and a delay.

In a possible implementation of the first aspect, the first mapping mode and the second mapping mode represent different mapping locations of a first modulation symbol(s) on the plurality of subcarriers, and the first modulation symbol(s) is R modulation symbol(s) of the plurality of modulation symbols, where $0<R\leq N$, and N is a quantity of modulation symbols included in the plurality of modulation symbols.

In still another possible implementation of the first aspect, the method further includes:

determining the second mapping mode in the plurality of mapping modes; and

mapping, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation of the first aspect, the first modulation symbol sequence corresponds to first data, and the second time unit is used to carry retransmitted data of the first data.

The foregoing describes a data retransmission scenario. Because a mapping mode of the second modulation symbol sequence is different from that of the first modulation symbol sequence, for a modulation symbol at a same location, when the second modulation symbol sequence is mapped, the modulation symbol may be mapped to different subcarriers. Therefore, the impact of frequency selective fading on data transmission is reduced, the quantity of data retransmission times can be effectively reduced, and the delay can be reduced.

In still another possible implementation of the first aspect, the determining the second mapping mode in the plurality of mapping modes includes:

determining the second mapping mode in the plurality of mapping modes based on a second parameter and/or second mapping mode information, where the second parameter includes a serial number of the second time unit or a redundancy version number of data carried in the second time unit.

In still another possible implementation of the first aspect, the second mapping mode information indicates at least one of an arrangement, a period, or an offset in a period of the plurality of mapping modes.

In still another possible implementation of the first aspect, the second mapping mode information is determined in at least one of the following manners: through presetting, by using higher layer signaling, or by using a quantity of hybrid automatic repeat request HARQ processes.

The foregoing describes several possible cases in which the second mapping mode information is determined. When the second mapping mode information is preset, calculation consumption for determining the mapping mode information may be reduced.

When the second mapping mode information is determined by using the higher layer signaling, the mapping mode information may be adjusted based on a data transmission requirement, thereby improving flexibility and user experience.

When the second mapping mode information is determined by using the quantity of HARQ processes, because the quantity of HARQ processes may indicate an interval between a time unit for retransmitted data and a time unit for initially transmitted data, the time unit carrying the retransmitted data may be more accurately adapted. Therefore, the mapping mode may be changed during data retransmission, the quantity of retransmission times may be reduced, and data transmission efficiency may be improved.

In still another possible implementation of the first aspect, the determining a first mapping mode in a plurality of mapping modes includes:

determining the first mapping mode in the plurality of mapping modes based on a first parameter and/or first mapping mode information, where the first parameter includes a serial number of the first time unit or a redundancy version number of data carried in the first time unit.

In still another possible implementation of the first aspect, the first mapping mode information indicates at least one of an arrangement, a period, or an offset in a period of the plurality of mapping modes.

In still another possible implementation of the first aspect, the first mapping mode information is determined in at least one of the following manners: through presetting, by using higher layer signaling, physical layer control signaling, or by using a quantity of hybrid automatic repeat request HARQ processes.

In still another possible implementation of the first aspect, the higher layer signaling may be one or more of broadcast information, system information, higher layer configuration signaling, media access control layer signaling, and the like.

The higher layer configuration signaling may be an X resource control (X resource control, XRC) message.

In still another possible implementation of the first aspect, the first mapping mode represents sequentially mapping the plurality of modulation symbols to the plurality of subcarriers in an order of indexes of the plurality of subcarriers.

In still another possible implementation of the first aspect, the serial number SN of the first time unit satisfies the following two conditions.

Condition1:

$$\text{floor}\left(\frac{\text{SN} - \text{Offset}}{\text{Period} + 1}\right)$$

is an even number.

Herein, SN≥0, floor() is a floor function, Offset is a start offset of the serial number of the first time unit, Period indicates an arrangement period of the plurality of mapping modes, and Period>0 or Period=0.

Condition 2: SN≥Offset or SN>Offset. For each parameter, refer to the foregoing descriptions.

In still another possible implementation of the first aspect, Condition 1 may alternatively be represented as:

$$\text{floor}\left(\frac{\text{SN} - \text{Offset}}{\text{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set. For example, in a possible implementation, the serial number SN of the first time unit satisfies the following condition:

$$\text{floor}\left(\frac{\text{SN}}{\text{Period} + 1}\right)$$

is an even number.

Herein, SN≥0, floor() is a floor function, Period indicates an arrangement period of the plurality of mapping modes, and Period>0 or Period=0.

The foregoing uses the floor function as an example for description. This application is also applicable to a case in which a ceiling function is used. For example, the ceiling function is ceil(), and the serial number SN of the first time unit may also satisfy the following condition:

$$\text{ceil}\left(\frac{\text{SN} - \text{Offset}}{\text{Period} + 1} - 1\right)$$

is an even number.

In still another possible implementation of the first aspect, the plurality of modulation symbols include N modulation symbols, and N is a natural number greater than 1. The second mapping mode represents:
mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, where L<N.

The order may be an ascending order, a descending order, or another predefined order.

In still another possible implementation of the first aspect, the serial number SN2 of the second time unit satisfies the following two conditions.

Condition1:

$$\text{floor}\left(\frac{\text{SN2} - \text{Offset2}}{\text{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period2>0 or Period2=0.

Condition 2: SN2≥Offset2 or SN2>Offset2. For each parameter, refer to the foregoing descriptions.

It should be noted that the foregoing describes a case in which the start offset exists. In a specific implementation process, this application is also applicable to a case in which the start offset is not set. For example, in a possible implementation, the serial number SN2 of the second time unit satisfies the following condition:

$$\text{floor}\left(\frac{\text{SN2}}{\text{Period2} + 1}\right)$$

is an odd number.

Herein, SN≥0, floor() is a floor function, Period2 indicates an arrangement period of the plurality of mapping modes, and Period2>0 or Period2=0.

In still another possible implementation of the first aspect, the plurality of mapping modes further include a third mapping mode. The method further includes:

determining the third mapping mode in the plurality of mapping modes; and
mapping, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

According to a second aspect, an embodiment of this application discloses a resource mapping method, including:

determining a first mapping mode in a plurality of mapping modes, where the plurality of mapping modes further include a second mapping mode; and
receiving, in the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In a possible implementation of the second aspect, the first mapping mode and the second mapping mode represent different mapping locations of a first modulation symbol on the plurality of subcarriers. The first modulation symbol is R modulation symbols of the plurality of modulation symbols, where 0<R≤N, and N is a quantity of modulation symbols included in the plurality of modulation symbols.

In still another possible implementation of the second aspect, the method further includes:

determining the second mapping mode in the plurality of mapping modes; and
receiving, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation of the second aspect, the first modulation symbol sequence corresponds to first data, and the second time unit is used to carry retransmitted data of the first data.

In still another possible implementation of the second aspect, the determining the second mapping mode in the plurality of mapping modes includes:
determining the second mapping mode in the plurality of mapping modes based on a second parameter and/or second mapping mode information, where the second parameter includes a serial number of the second time unit or a redundancy version number of data carried in the second time unit.

In still another possible implementation of the second aspect, the second mapping mode information indicates at least one of an arrangement, a period, or an offset in a period of the plurality of mapping modes.

In still another possible implementation of the second aspect, the second mapping mode information is determined in at least one of the following manners: through presetting, by using higher layer signaling, or by using a quantity of hybrid automatic repeat request HARQ processes.

In still another possible implementation of the second aspect, the determining a first mapping mode in a plurality of mapping modes includes:
determining the first mapping mode in the plurality of mapping modes based on a first parameter and/or first mapping mode information, where the first parameter includes a serial number of the first time unit or a redundancy version number of data carried in the first time unit.

In still another possible implementation of the second aspect, the first mapping mode information indicates at least one of an arrangement, a period, or an offset in a period of the plurality of mapping modes.

In still another possible implementation of the second aspect, the first mapping mode information is determined in at least one of the following manners: through presetting, by using higher layer signaling, or by using a quantity of hybrid automatic repeat request HARQ processes.

In still another possible implementation of the second aspect, the higher layer signaling may be one or more of broadcast information, system information, higher layer configuration signaling, media access control layer signaling, and the like.

In still another possible implementation of the second aspect, the first mapping mode represents sequentially mapping the plurality of modulation symbols to the plurality of subcarriers in an order of indexes of the plurality of subcarriers.

In still another possible implementation of the second aspect, the serial number SN of the first time unit satisfies the following two conditions.

Condition 1:

$$\mathrm{floor}\left(\frac{\mathrm{SN} - \mathrm{Offset}}{\mathrm{Period} + 1}\right)$$

is an even number.

Herein, SN≥0, floor() is a floor function, Offset is a start offset of the serial number of the first time unit, Period indicates an arrangement period of the plurality of mapping modes, and Period>0 or Period=0.

Condition 2: SN≥Offset or SN>Offset. For each parameter, refer to the foregoing descriptions. In still another possible implementation of the second aspect, Condition 1 may alternatively be represented as:

$$\mathrm{floor}\left(\frac{\mathrm{SN} - \mathrm{Offset}}{\mathrm{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set.

The foregoing uses the floor function as an example for description. This application is also applicable to a case in which a ceiling function is used. For example, the ceiling function is ceil(), and the serial number SN of the first time unit may also satisfy the following condition:

$$\mathrm{ceil}\left(\frac{\mathrm{SN} - \mathrm{Offset}}{\mathrm{Period} + 1} - 1\right)$$

is an even number.

In still another possible implementation of the second aspect, the plurality of modulation symbols include N modulation symbols, and N is a natural number greater than 1. The second mapping mode represents:

mapping first to Lth modulation symbols to subcarriers in an order of indexes of the subcarriers starting from an index of an (N-L+1)th subcarrier, and mapping (L+1)th to Nth modulation symbols to subcarriers in an order of indexes of the subcarriers starting from an index of a first subcarrier, where L<N.

In still another possible implementation of the second aspect, the serial number SN2 of the second time unit satisfies the following two conditions.

Condition 1:

$$\mathrm{floor}\left(\frac{\mathrm{SN2} - \mathrm{Offset2}}{\mathrm{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period>0 or Period=0.

Condition 2: SN2≥Offset2 or SN2>Offset2. For each parameter, refer to the foregoing descriptions. It should be noted that the foregoing describes a case in which the start offset exists. In a specific implementation process, this application is also applicable to a case in which the start offset is not set.

In still another possible implementation of the second aspect, the plurality of mapping modes further include a third mapping mode. The method further includes:

> determining the third mapping mode in the plurality of mapping modes; and
> mapping, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

According to a third aspect, an embodiment of this application discloses a resource mapping apparatus. The resource mapping apparatus includes a determining unit and a mapping unit. The resource mapping apparatus is configured to implement the method described in the first aspect or any possible implementation of the first aspect.

According to a fourth aspect, an embodiment of this application discloses a resource mapping apparatus. The resource mapping apparatus includes a determining unit and a demapping unit. The resource mapping apparatus is configured to implement the method described in the second aspect or any possible implementation of the second aspect.

According to a fifth aspect, an embodiment of this application discloses a resource mapping apparatus. The resource mapping apparatus includes at least one processor and a communication interface. The at least one processor is configured to invoke a computer program stored in at least one memory, so that the apparatus implements the method described in the first aspect or any possible implementation of the first aspect.

According to a sixth aspect, an embodiment of this application discloses a resource mapping apparatus. The resource mapping apparatus includes at least one processor and a communication interface. The at least one processor is configured to invoke a computer program stored in at least one memory, so that the apparatus implements the method described in the second aspect or any possible implementation of the second aspect.

According to a seventh aspect, an embodiment of this application further provides a terminal. The terminal includes the resource mapping apparatus described in the third aspect or any possible implementation of the third aspect, or includes the resource mapping apparatus described in the fourth aspect or any possible implementation of the fourth aspect.

According to an eighth aspect, an embodiment of this application further provides a chip system. The chip system includes at least one processor and a communication interface. The communication interface is configured to send and/or receive data. The at least one processor is configured to invoke a computer program stored in at least one memory, so that the chip system implements the method described in the first aspect or any possible implementation of the first aspect, or implements the method described in the second aspect or any possible implementation of the second aspect.

According to a ninth aspect, an embodiment of this application further provides a computer-readable storage medium. The computer-readable storage medium stores a computer program. When the computer program runs on one or more processors, the method described in the first aspect or any possible implementation of the first aspect is performed, or the method described in the second aspect or any possible implementation of the second aspect is performed.

According to a tenth aspect, an embodiment of this application further provides a computer program product. When the computer program product runs on one or more processors, the method described in the first aspect or any possible implementation of the first aspect is performed, the method described in the second aspect or any possible implementation of the second aspect is performed, or the method described in the third aspect or any possible implementation of the third aspect is performed.

According to an eleventh aspect, an embodiment of this application further provides a terminal. The terminal may be an intelligent cockpit product, a vehicle, or the like. The terminal includes a first node and/or a second node. The first node (for example, a base station or an automotive cockpit domain controller CDC) includes the resource mapping apparatus described in the third aspect or any possible implementation of the third aspect. The second node (for example, one or more of modules such as a camera, a screen, a microphone, an acoustic device, a radar, an electronic key, a passive entry passive start system controller, and user equipment UE) includes the resource mapping apparatus described in the fourth aspect or any possible implementation of the fourth aspect.

Alternatively, the vehicle may be replaced with an intelligent terminal or a transportation tool, like an uncrewed aerial vehicle or a robot.

According to a twelfth aspect, an embodiment of this application further provides a communication system. The communication system includes a first resource mapping apparatus and a second resource mapping apparatus. The first resource mapping apparatus is configured to implement the method described in the first aspect or any possible implementation of the first aspect. The second resource mapping apparatus is configured to implement the method described in the second aspect or any possible implementation of the second aspect.

**BRIEF DESCRIPTION OF DRAWINGS**

The following describes the accompanying drawings used in embodiments of this application.

FIG. 1 is a schematic diagram of an architecture of a communication system according to an embodiment of this application;
FIG. 2 is a schematic diagram of an application scenario of a resource mapping method according to an embodiment of this application;
FIG. 3 is a schematic diagram of a mapping mode according to an embodiment of this application;
FIG. 4 is a schematic flowchart of a resource mapping method according to an embodiment of this application;
FIG. 5A is a schematic diagram of a first mapping mode according to an embodiment of this application;
FIG. 5B is a schematic diagram of a second mapping mode according to an embodiment of this application;
FIG. 5C is a schematic diagram of still another second mapping mode according to an embodiment of this application;
FIG. 6 is a schematic flowchart of still another resource mapping method according to an embodiment of this application;
FIG. 7A is a schematic diagram of still another first mapping mode according to an embodiment of this application;
FIG. 7B is a schematic diagram of still another second mapping mode according to an embodiment of this application;
FIG. 7C is a schematic diagram of a third mapping mode according to an embodiment of this application;
FIG. 8 is a schematic flowchart of still another resource mapping method according to an embodiment of this application;
FIG. 9 is a schematic diagram of a resource mapping method according to an embodiment of this application;
FIG. 10 is a schematic diagram of still another resource mapping method according to an embodiment of this application;
FIG. 11A is a schematic diagram of performance of a resource mapping method according to an embodiment of this application;
FIG. 11B is a schematic diagram of performance of still another resource mapping method according to an embodiment of this application;
FIG. 12(a) to FIG. 12(d) are schematic diagrams of determining mapping mode information according to an embodiment of this application;
FIG. 13 is a schematic diagram of a structure of a resource mapping apparatus according to an embodiment of this application;
FIG. 14 is a schematic diagram of a structure of still another resource mapping apparatus according to an embodiment of this application; and
FIG. 15 is a schematic diagram of a structure of still another resource mapping apparatus according to an embodiment of this application.

**DESCRIPTION OF EMBODIMENTS**

It should be noted that, in this application, the term like "as an example" or "for example" is used to represent giving an example, an illustration, or a description. Any embodiment or design solution described by using "as an example" or "for example" in this application should not be construed as being preferred or having more advantages than another embodiment or design solution. To be precise, the term like "as an example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may represent a, b, c, (a and b), (a and c), (b and c), or (a, b, and c), where a, b, and c may be singular or plural. "And/or" describes an association relationship between associated objects, and represents that three relationships may exist. For example, A and/or B may represent the following three cases: Only A exists, both A and B exist, and only B exists. A and B each may be singular or plural. The character "/" generally indicates an "or" relationship between the associated objects.

In embodiments of this application, the term "when..." may be interpreted to mean "if..", "after...", "in response to it is determined that...", or "in response to it is detected...", depending on the context.

In addition, unless otherwise stated, ordinal terms such as "first" and "second" used in embodiments of this application are used to distinguish between a plurality of objects, and are not intended to limit a sequence, a time sequence, priorities, or importance degrees of the plurality of objects. For example, a first mapping mode and a second mapping mode are merely used to distinguish between different mapping modes, but do not indicate different importance degrees and the like of the two mapping modes.

For ease of understanding, the following describes, by using examples, some concepts related to embodiments of this application for reference. Details are shown as follows.

1: Orthogonal frequency division multiplexing (Orthogonal frequency division multiplexing, OFDM) technology

The OFDM technology is a multi-carrier frequency division multiplexing (frequency division multiplexing, FDM) technology. A plurality of carriers (carriers) operate at the same time. These carriers may be referred to as subcarriers (subcarriers) in the FDM technology. In OFDM, the plurality of subcarriers are orthogonal, and thus this technology is referred to as orthogonal frequency division multiplexing. An operating frequency of a subcarrier corresponds to a frequency. From a perspective of a spectrum, each subcarrier uses a frequency of the subcarrier as a center frequency, and occupies a specific bandwidth.

OFDM can adjust a quantity of subcarriers to flexibly change an operating bandwidth, thereby meeting a requirement for a large bandwidth and achieving better capacity expansion effects.

In the OFDM technology, a signal is carried by using an OFDM symbol, and one OFDM symbol may correspond to one or more subcarriers. A cyclic prefix (Cyclic Prefix, CP) may be added to an OFDM symbol to avoid inter-symbol interference. The OFDM symbol to which the CP is added is referred to as a CP-OFDM symbol.

2: Hybrid automatic repeat request (hybrid automatic repeat request, HARQ)

In a mobile communication system, when data is sent/received, a receiver needs to notify a transmitter whether the data is successfully received. If successfully decoding a received signal, the receiver feeds back an acknowledge character (Acknowledge character, ACK) to the transmitter. If failing in reception or decoding, the receiver feeds back a negative acknowledge character (Negative Acknowledge character, NACK) to the transmitter, and the transmitter may choose to resend the data. This process is referred to as automatic repeat request (automatic repeat request, ARQ).

HARQ is a technology that combines forward error correction (Forward error correction, FEC) encoding and automatic repeat request (ARQ). When failing in decoding, the receiver stores received data, and asks the transmitter to retransmit the data. The receiver combines the retransmitted data and the previously received data, and then decodes the data. A diversity gain reduces a quantity of retransmission times, thereby reducing a delay. The HARQ technology may be generally classified into chase combining HARQ (Chase Combining HARQ, CC-HARQ) and incremental redundancy HARQ (Incremental Redundancy HARQ, IR-HARQ).

In CC-HARQ, the transmitter transmits, in each retransmission, encoded data (data obtained through encoding) that is the same as that in initial transmission, and the receiver performs maximum ratio combining on encoded data received a plurality of times. Because the same encoded data is transmitted each time, CC-HARQ may be considered as using a repetition code. Through retransmission and maximum ratio combining, an equivalent signal noise ratio (signal noise ratio, SNR or S/N) of received information is improved, thereby reducing an error probability.

In IR-HARQ, the transmitter transmits different encoded data in each retransmission. The transmitter processes (for example, processes through puncturing) an output of a forward error correction encoder, thereby generating different redundancy versions. Different redundancy versions are sent in each retransmission, so that the receiver may receive new information, to help a decoder complete information decoding. It should be noted herein that an RV is generally used to implement incremental redundancy (Incremental redundancy, IR) HARQ transmission. For example, redundant bits generated by the encoder are divided into a plurality of groups, each RV defines one transmission start point, and different RVs are used for initial transmission and each retransmission, to implement gradual accumulation of the redundant bits and complete an incremental redundancy HARQ operation. Alternatively, bits generated by the encoder may be arranged in a specific manner, each RV defines one transmission start point, and corresponding bits are extracted, based on this start point in a specific manner, from the encoded bits generated by the encoder to form a channel bit sequence.

3: Time unit

The time unit indicates a time length in time domain. A unit of the time unit may be a superframe, a radio frame (radio frame), a symbol (symbol), a mini-slot (mini-slot), a slot (slot), a subframe, another time unit, or the like. The superframe is a time unit including a plurality of radio frames. The radio frame is a time unit smaller than the superframe. The symbol is a time unit smaller than the radio frame.

For example, in an on-board short-range wireless communication system, a length of the radio frame is 1/48 ms=20.833 μs, each superframe includes 48 radio frames, and a length of each superframe is 1 ms. In an example, one superframe includes 48 radio frames, and the 48 radio frames are sequentially numbered as a radio frame #0 to a radio frame #47. Each radio frame includes 10 symbols. In the 10 symbols, four symbols are downlink, three symbols are uplink, two symbols are used as a guard gap (gap, GAP), and one symbol is used as a flexible symbol. The flexible symbol may be used for uplink transmission, may be used for downlink transmission, or may be used for other transmission. This is not limited. In the on-board (or off-board) short-range wireless communication system in the foregoing example, uplink is usually a direction in which a terminal (terminal, T) node sends data or information to a grant (grant, G) node, and may be represented by "T". Downlink is usually a direction in which the G node sends data or information to the T node, and may be represented by "G". In the on-board short-range wireless communication system, there is usually a communication requirement between different T nodes or between different G nodes, and communication between different T nodes or between different G nodes may occupy the foregoing flexible symbol.

4: Serial number of a time unit

In embodiments of this application, the serial number of the time unit may start from a preset value (for example, 0). The preset value may be preconfigured or pre-specified (for example, specified in a protocol). Further, when the serial number of the time unit reaches a threshold (for example, is equal to the threshold), the serial number of the time unit is reversed, and the serial number of the time unit may restart from the preset value.

The preset value may be preconfigured, indicated by higher layer signaling, or specified in the protocol. For example, according to a protocol specification, the serial number of the time unit changes from 0, is reversed when changing to a maximum value, and continues to increase in order after returning to 0.

5: Broadcast

Broadcast is an information transmission manner, a manner in which a node in a network sends information. A range to which the information may be transmitted is referred to as a broadcast domain. Another node in the broadcast domain may receive the information. The information sent in the broadcast manner may be referred to as broadcast information, and includes but is not limited to broadcast information and/or system information. In contrast, unicast information is information transmitted between a single transmitter and a single receiver through network communication.

The broadcast domain may be affected by a plurality of factors. For example, higher transmit power of the node indicates a larger range of the broadcast domain. Alternatively, compared with a high frequency band, a low frequency band has a longer transmission distance and a broadcast domain of a larger range. For ease of description, in the following embodiments, if a distance between two nodes is short, or one node is near the other node, it indicates that one node is located in a broadcast domain of the other node, that is, the node may receive broadcast information sent by the other node.

6: System information

The system information may also be referred to as communication domain system information (domain system info), and is information sent by a node in a communication domain (the node is usually a grant node or a control node in the communication domain) to another node in the communication domain. Optionally, the system information is usually sent in a broadcast manner. In this case, the system information is a type of broadcast information. However, in some scenarios, the system information may also be sent in a multicast or unicast manner. Generally, one communication domain includes one G node and at least one T node.

The system information usually includes one or more parameter blocks of an important parameter block (Master Information Block, MIB) and one or more system parameter blocks (System Information Blocks, SIBs). A communication related parameter may be configured by using the system information.

7: Higher layer configuration signaling

The higher layer configuration signaling is used to configure a communication parameter, or is used to implement functions such as power control, channel allocation, packet scheduling, and end-to-end quality of service (Quality of Service, QoS) assurance. For example, the higher layer configuration signaling may be an X resource control (X resource control, XRC) message.

For example, an on-board short-range wireless communication system includes a T node and a G node. Higher layer configuration signaling determined by the T node may be referred to as higher layer configuration signaling specific to the T node. Higher layer configuration signaling sent by the G node may be referred to as higher layer configuration signaling specific to the G node.

The foregoing descriptions of the related concepts may be applied to the following embodiments.

The following describes embodiments of this application with reference to the accompanying drawings in embodiments of this application.

A system architecture and a service scenario described in this application are intended to describe the technical solutions in this application more clearly, and do not constitute any limitation to the technical solutions provided in this application. A person of ordinary skill in the art may know that, with evolution of the system architecture and emergence of a new service scenario, the technical solutions provided in this application are also applicable to similar technical problems.

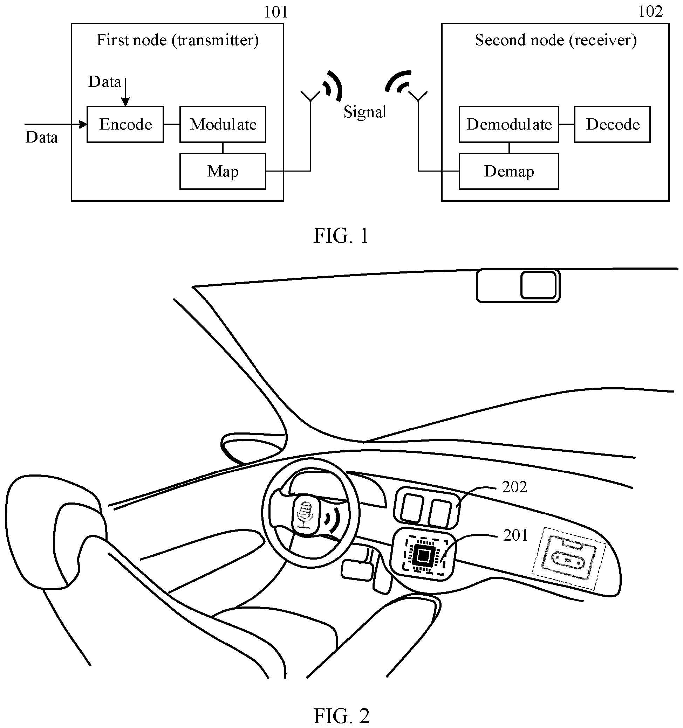

FIG. 1 is a schematic diagram of a possible wireless communication system according to an embodiment of this application. The wireless communication system includes a first node 101 and a second node 102. The first node sends data to the second node. Therefore, the first node 101 may also be referred to as a transmitter, and the second node 102 may also be referred to as a receiver.

When sending the data, the first node 101 encodes and modulates the data to form a modulation symbol, maps the modulation symbol to a corresponding carrier (or subcarrier), and sends a radio signal by using an antenna. The second node 102 demaps, demodulates, and decodes the received radio signal to obtain the transmitted data. A link for wireless communication between the first node 101 and the second node 102 may be based on a plurality of communication technologies. For example, the communication technologies may be short-range connection technologies, including 802.11b/g, Bluetooth (Bluetooth), Zigbee (Zigbee), a radio frequency identification (Radio Frequency Identification, RFID) technology, an ultra wideband (Ultra Wideband, UWB) technology, a short-range wireless communication system (for example, an on-board short-range wireless communication system), and the like. For another example, the communication technologies may be long-distance connection technologies, including a global system for mobile communications (Global System for Mobile communications, GSM), a general packet radio service (General Packet Radio Service, GPRS), a universal mobile telecommunications system (Universal Mobile Telecommunications System, UMTS), and other radio access technologies. Certainly, it is not excluded that another wireless communication technology may be used to support communication between the first node 101 and the second node 102.

In some specific implementation scenarios, the first node 101 may also be referred to as a G node, a grant node, or a control node, and the second node 102 may also be referred to as a T node or a terminal. A transmission link from the G node to the T node may be referred to as a C link or a downlink. A transmission link from the T node to the G node may be referred to as a T link or an uplink.

It should be understood that only an example in which the first node 101 is the transmitter and the second node 102 is the receiver is used herein for description. This application is also applicable to a scenario in which the first node 101 is the receiver and the second node is the transmitter.

In a wireless communication process, a signal arrives at the receiver through a plurality of paths, and multipath signal superposition causes inconsistent channel fading coefficients corresponding to different frequencies, that is, frequency domain selective fading. If channel quality on a specific frequency band is poor, a modulation symbol on a subcarrier corresponding to the frequency band may be decoded incorrectly. Because frequency domain selective fading slowly changes in time, there may be a transmission error for the signal transmitted in a period of time on the subcarrier corresponding to the frequency band, which affects signal transmission efficiency.

For example, FIG. 2 is a schematic diagram of a wireless communication scenario in a vehicle according to an embodiment of this application. A cockpit domain controller (cockpit domain controller, CDC) 201 in the vehicle is a control center in an intelligent cockpit device, and may be considered as the first node 101. A display controller 202 that supports a wireless communication technology in the vehicle may be considered as the second node 102. A wireless connection may be established between the CDC 201 and the display controller 202, thereby reducing a quantity of bundles in the vehicle. The CDC 201 may perform data transmission with the display controller 202 by using the wireless communication technology.

Specifically, when the CDC 201 sends a piece of data to the display controller 202, this piece of data is first divided into a plurality of transport blocks (transport blocks, TBs). The CDC determines one or more TBs sent in a time unit, and encodes and modulates each data block to obtain a plurality of modulation symbols. For example, one transport block is sent in a time unit, and an encoded transport block includes 800-bit (bit) data. If modulation is performed in a quadrature phase shift keying (Quadrature Phase Shift Keying, QPSK) mode, each modulation symbol may indicate 2-bit data, and 400 modulation symbols may be obtained. When the modulation symbols are mapped to subcarriers, mapping may be performed by form of a modulation symbol or a modulation symbol group.

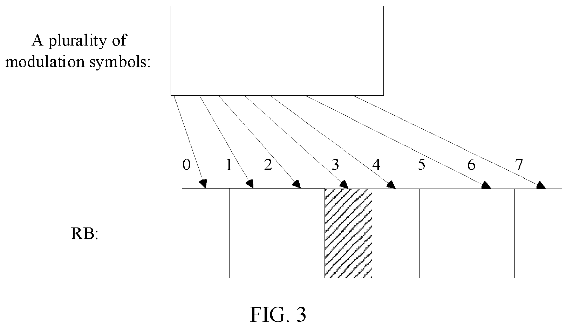

For example, FIG. 3 is a schematic diagram of a mapping mode according to an embodiment of this application. The modulation symbols may be mapped to a plurality of RBs. For example, one RB includes 12 subcarriers and there are eight available RBs. In this case, one modulation symbol sequence may include 96 modulation symbols. Considering a possible case, if channel quality on a frequency band corresponding to an RB with a serial number 3 in FIG. 3 is poor, a decoding error is likely to occur on a modulation symbol on a subcarrier corresponding to the frequency band, that is, frequency selective fading. When a decoding error occurs, the display controller 202 may feed back a NACK to the transmitter (the CDC 201). In this case, the transmitter (the CDC 201) may retransmit data to the display controller 202. However, a decoding error is still likely to occur on the retransmitted data due to impact of frequency selective fading. Therefore, a plurality of retransmissions are required to obtain correct data through decoding, which affects data transmission efficiency. However, in a travel process of the vehicle, if the CDC 201 transmits data to the display controller 202 with a low transmission efficiency, a driving decision, a driving route, a safety prompt, and the like cannot be transmitted in a timely manner, threatening driving safety.

Therefore, how to reduce impact of frequency selective fading on data transmission and improve data transmission efficiency is a problem that urgently needs to be resolved.

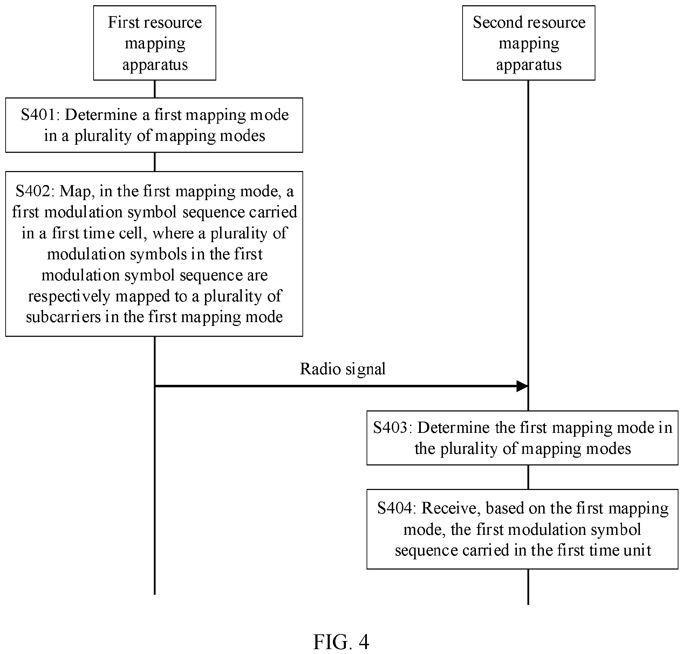

FIG. 4 is a schematic flowchart of a resource mapping method according to an embodiment of this application. Optionally, the method may be implemented based on an architecture shown in FIG. 1. The method includes but is not limited to the following steps.

Step S401: A first resource mapping apparatus determines a first mapping mode in a plurality of mapping modes, where the plurality of mapping modes further include a second mapping mode.

For ease of description, a resource mapping apparatus at the transmitter is referred to as the first resource mapping apparatus. The first resource mapping apparatus may map a modulation symbol to a subcarrier in a mapping mode. For example, refer to FIG. 1. The first resource mapping apparatus may be a resource mapping apparatus in the first node 101. Alternatively, the first resource mapping apparatus may be a chip or an integrated circuit in the first node 101. Alternatively, the first resource mapping apparatus may be the first node 101.

In this embodiment of this application, the mapping mode may represent a subcarrier location to which the modulation symbol is mapped. The modulation symbol is a symbol obtained after data (or referred to as a code word) is modulated. Optionally, a quantity of modulation symbols in a modulation symbol sequence may correspond to a quantity of currently scheduled subcarriers. For example, the quantity of currently scheduled subcarriers is N, and a quantity of modulation symbols in a first modulation symbol sequence may be N. It should be understood that the subcarrier in this application is described as an effective subcarrier. The scheduled subcarrier belongs to a subcarrier set. The subcarrier set may include a plurality of subcarriers within an available bandwidth. The plurality of subcarriers within the available bandwidth may be scheduled to carry modulation symbols. Optionally, the subcarrier set may further include one or more subcarriers within an unavailable bandwidth.

When a plurality of modulation symbols in the modulation symbol sequence (for example, the first modulation symbol sequence) are mapped to a plurality of subcarriers, the first mapping mode and the second mapping mode represent different mapping locations of the plurality of modulation symbols on the plurality of subcarriers. It should be understood that the different mapping locations may be that mapping locations of at least one modulation symbol are different, or may be that mapping locations of any modulation symbol in the plurality of modulation symbols are different. For example, the plurality of modulation symbols include N modulation symbols. The first mapping mode and the second mapping mode represent different mapping locations of a first modulation symbol of the plurality of modulation symbols on the plurality of subcarriers. The first modulation symbol is R modulation symbols, where $0 < R \leq N$.

This application provides two possible cases as examples.

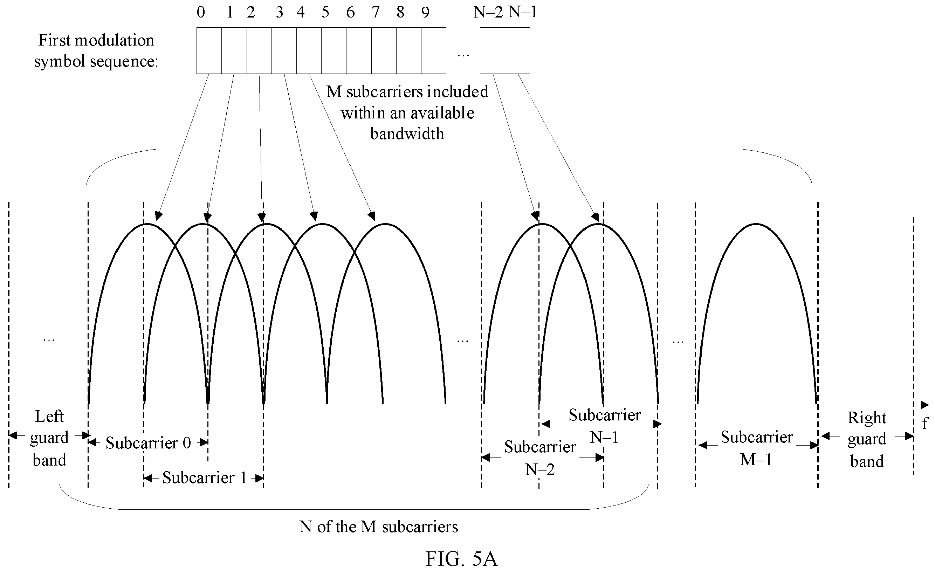

Case 1: If the plurality of modulation symbols are separately mapped to the plurality of subcarriers in a first modulation mode and a second modulation mode, mapping locations of two modulation symbols are different. FIG. 5A is a schematic diagram of a possible first mapping mode according to an embodiment of this application. The first modulation symbol sequence includes N modulation symbols, represented as a serial number 0 to a serial number (N-1) for ease of description. A bandwidth part shown in FIG. 5A has a total of M subcarriers that can be scheduled. In this case, the subcarrier set includes the M subcarriers, which may be represented as a serial number 0 to a serial number (M-1) for ease of description.

For example, subcarriers scheduled at a MAC layer are subcarriers with the serial number 0 to a serial number (N-1). In the first mapping mode, the N modulation symbols in the first modulation symbol sequence are respectively mapped to the subcarriers with the serial number 0 to the serial number (N-1) in an order of serial numbers of the subcarriers. It should be noted that an example in which the modulation symbols are mapped in ascending order of the serial numbers is used for description in this application. This application is also applicable to a case in which the modulation symbols are mapped in descending order of the serial numbers or in another predefined order.

For ease of understanding, the plurality of modulation symbols are represented by using $d_i$ ($0 \leq i \leq N - 1$), and the plurality of subcarriers are represented by using $e_{j_i}$, where j indicates an index of a subcarrier. The first mapping mode may be represented as:

$$d_i \rightarrow e_{j_i}, \qquad (0 \leq i \leq N - 1)$$

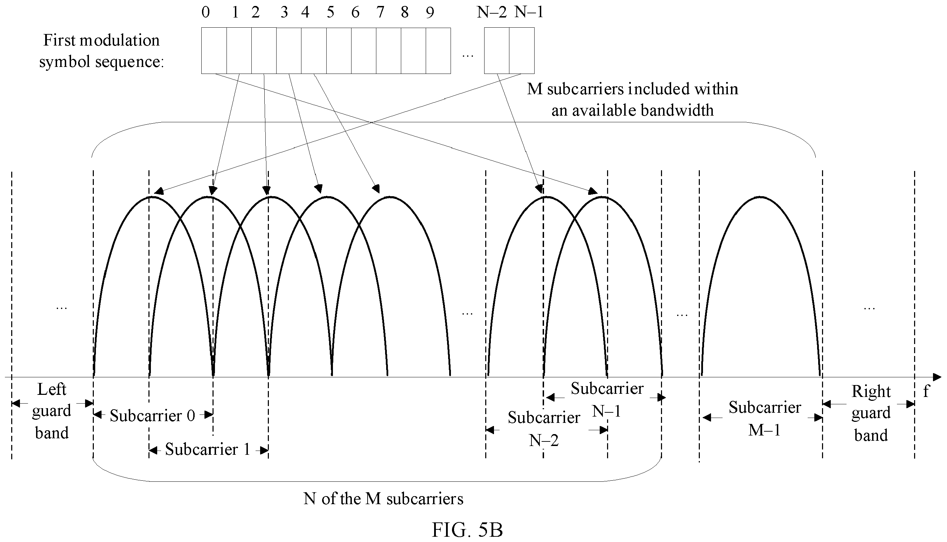

FIG. 5B is a schematic diagram of a possible second mapping mode according to an embodiment of this application. In the first mapping mode, a modulation symbol corresponding to the serial number 0 is mapped to a subcarrier with the serial number (N-1), a modulation symbol corresponding to the serial number (N-1) is mapped to a subcarrier with the serial number 0, and modulation symbols with a serial number 1 to a serial number (N-2) are respectively mapped to subcarriers with a serial number 1 to a serial number (N-2) in an order of serial numbers of the subcarriers.

For ease of understanding, the plurality of modulation symbols are represented by using $d_i$ ($0 \leq i \leq N - 1$), and

the plurality of subcarriers are represented by using $e_{j_i}$ ($0 \le i \le N - 1$), where j indicates an index of a subcarrier. The first mapping mode may be represented as:

$$d_i \rightarrow e_{j_{N-1}}, \qquad (i = 0)$$

$$d_{N-1} \rightarrow e_{j_0}, \qquad (i = N - 1)$$

$$d_i \rightarrow e_{j_i}, \qquad (1 \le i \le N - 2)$$

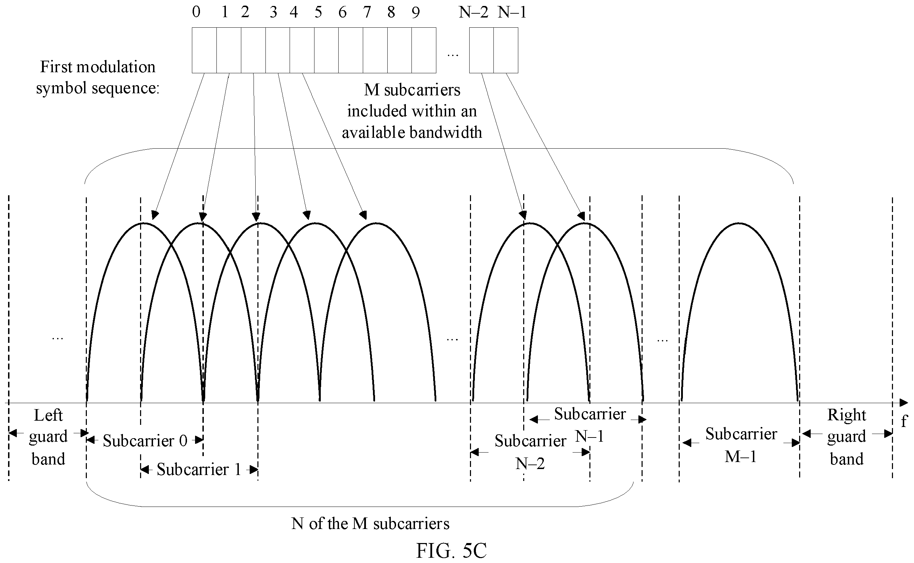

Case 2: If the plurality of modulation symbols are separately mapped to the plurality of subcarriers in a first modulation mode and a second modulation mode, mapping locations of all the modulation symbols are different. For example, FIG. 5C is a schematic diagram of still another possible second mapping mode according to an embodiment of this application. In the second mapping mode, a modulation symbol with a serial number 0 (or a first modulation symbol) to a modulation symbol with a serial number (L-1) (or an L$^{th}$ modulation symbol) are sequentially mapped to subcarriers in an order of serial numbers of the subcarriers starting from a subcarrier with a serial number (N-L) (or an (N-L+1)$^{th}$ subcarrier), and modulation symbols with a serial number L to a serial number (N-1) are sequentially mapped to subcarriers in an order of serial numbers of the subcarriers starting from a subcarrier with a serial number 0, where L<N. It should be noted that a location of a subcarrier may be indicated by using an index of the subcarrier. Herein, an example in which the index of the subcarrier is a serial number of the subcarrier is used for description. This application is also applicable to a case in which another index manner is used.

For ease of understanding, the plurality of modulation symbols are represented by using $d_i$ ($0 \le i \le N - 1$), and the plurality of subcarriers are represented by using $e_{j_i}$, where j indicates an index of a subcarrier. The first mapping mode may be represented as:

$$d_i \rightarrow e_{j_{\mathrm{mod}(i+L,N)}}, \qquad (0 \le i \le N - 1, \mathrm{L} < N)$$

Herein, mod indicates a modulo operation. For example, N is 10, L is 4, and the index of the subcarrier is the serial number of the subcarrier. In this case, the modulation symbol with the serial number 0 is mapped to a subcarrier with a serial number 6, a modulation symbol with a serial number 1 is mapped to a subcarrier with a serial number 7, ..., and a modulation symbol with a serial number 4 is mapped to the subcarrier with the serial number 0. The rest may be deduced by analogy.

In a possible implementation, the first resource mapping apparatus may determine the first mapping mode in the plurality of mapping modes based on at least one of mapping mode information, a first parameter, NACK indication information, and the like. The first parameter may include one or more of a serial number of a time unit, a redundancy version number, and another identifier of the time unit. For ease of description, the mapping mode information for determining the first mapping mode is referred to as first mapping mode information. For example, this application provides the following several possible implementations as examples.

Implementation 1: The first mapping mode in the plurality of mapping modes is determined by using the first mapping mode information. The first mapping mode information indicates at least one of a period, an offset, an arrangement, or the like of the plurality of mapping modes. The offset may be an offset in the period. For ease of understanding, this application provides the following three examples.

Example 1: The mapping mode information may indicate the period of the mapping modes. For example, the plurality of mapping modes include two mapping modes, and the first mapping mode information may be "00001111", where 0 indicates the first mapping mode, and 1 indicates the second mapping mode. For example, a change rule of the mapping modes may be that the mapping mode is changed once at an interval of one time unit. A unit of the time unit may be a superframe, a radio frame (radio frame), a symbol (symbol), a mini-slot (mini-slot), a slot (slot), a subframe, another time unit, or the like. When the unit of the time unit is a superframe, the serial number of the time unit may be referred to as a superframe serial number or a superframe number.

Table 1 is a possible schematic table of mapping mode information and a serial number of a corresponding time unit according to an embodiment of this application. It may be learned that a superframe with a superframe serial number a (referred to as a superframe a for ease of description) corresponds to the first mapping mode. To be specific, a mapping mode of a first symbol sequence carried in the superframe a is the first mapping mode. Similarly, a mapping mode of a first symbol sequence carried in a superframe (a+4) is the second mapping mode. A part that is not shown may be deduced by analogy.

**Table 1 Mapping mode information and a serial number of a possible time unit**

| Mapping mode information | ... | 0 | 0 | 0 | 0 | 1 | 1 | 1 | 1 | 0 | ... |
|---|---|---|---|---|---|---|---|---|---|---|---|
| Superframe serial number | ... | a | a+1 | a+2 | a+3 | a+4 | a+5 | a+6 | a+7 | a+8 | ... |

Alternatively, the first mapping apparatus maps the plurality of modulation symbols to the plurality of subcarriers based on the mapping mode information, and the mapping mode is changed once at an interval of four superframes.

It may be understood that the period is described only by using an example in which two mapping modes are included. This application is also applicable to a case in which three, four, or another quantity of mapping modes are included. For example, the plurality of mapping modes include three mapping modes. The period of the mapping modes may be "aabbcc", where a indicates the first mapping mode, b indicates the second mapping mode, and c indicates a third mapping mode.

Example 2: The first mapping mode information may include the offset, to indicate an offset in a period. For example, the plurality of mapping modes include two mapping modes, and the period of the plurality of mapping modes is "00001111", where 0 indicates the first mapping mode, and 1 indicates the second mapping mode. Offset information is 3. An arrangement of the mapping modes after the offset may be represented as "0111100001111000...". Table 2 is still another possible schematic table of mapping mode information and a serial number of a corresponding time unit according to an embodiment of this application. It may be learned that a superframe with a superframe serial number b (referred to as a superframe b for ease of description) corresponds to the first mapping mode. To be specific, a mapping mode of a first symbol sequence carried in the superframe b is the first mapping mode. Similarly, a mapping mode of a first symbol sequence carried in a superframe (b+1) is the second mapping mode. Apart that is not shown may be deduced by analogy.

**Table 2 Mapping mode information and a serial number of a possible time unit**

| Mapping mode information | 0 | 1 | 1 | 1 | 1 | 0 | 0 | 0 | 0 | 1 | ... |
|---|---|---|---|---|---|---|---|---|---|---|---|
| Superframe serial number | b | b+1 | b+2 | b+3 | b+4 | b+5 | b+6 | b+7 | b+8 | b+8 | ... |

In a possible design, the first mapping apparatus may preconfigure, predefine, or pre-obtain the period of the mapping modes, so that the first mapping apparatus may determine the first mapping mode based on the offset.

Example 3: The first mapping mode information is the arrangement, or a pattern (pattern), of the plurality of mapping modes. For example, the plurality of mapping modes include two mapping modes, and the arrangement of the plurality of mapping modes is "01001010110101110", where 0 indicates the first mapping mode, and 1 indicates the second mapping mode. It may be learned that the arrangement of the plurality of mapping modes may be presented in an aperiodic form.

In a possible implementation, the first mapping mode information may be preset (for example, a predefined rule, or defined in a protocol), may be determined by using higher layer signaling, or may be determined by using a quantity of HARQ processes.

The higher layer signaling may be one or more of broadcast information, system information, higher layer configuration signaling, MAC layer signaling, and the like.

In a possible design, the transmitter, the receiver, or the control node (for example, a base station or a C node) sends the higher layer signaling to indicate the mapping mode information, for example, indicate the period N of the mapping modes or indicate a start offset Offset.

The quantity of HARQ processes indicates concurrent HARQ processes. In this application, the quantity of HARQ processes may be preconfigured or predefined (for example, specified in the protocol), may be sent by another apparatus or module and received by the first mapping apparatus, or may be calculated by the first mapping apparatus.

Implementation 2: The first mapping mode in the plurality of mapping modes is determined by using the serial number of the time unit. The modulation symbol sequence is carried in the time unit. Optionally, the time unit may be one or more of a superframe, a radio frame, and the like. When the time unit is a superframe, the serial number of the time unit may be referred to as a superframe serial number. Optionally, the superframe serial number may include at least one of a serial number of a superframe carrying data, a serial number of a superframe carrying downlink control information (Downlink Control Information, DCI) signaling, and the like.

In a possible design, an example in which the serial number of the time unit is SN and the plurality of mapping modes include two mapping modes is used. When the first mapping mode in the plurality of mapping modes is determined, SN satisfies the following condition:

$$SN \bmod 2 = 0$$

In still another possible design, when SN is an even number, the first mapping mode in the plurality of mapping modes is determined.

It should be understood that this is also applicable to a case in which the plurality of mapping modes include another quantity of mapping modes. For example, the plurality of mapping modes include three mapping modes. If SN mod 3=0, the first mapping mode in the plurality of mapping modes is determined; if SN mod 3=1, the second mapping mode in the plurality of mapping modes is determined; or if SN mod 3=2, a third mapping mode in the plurality of mapping modes is determined.

In still another possible design, the first mapping apparatus may determine the first mapping mode in the plurality of mapping modes based on the serial number of the time unit and an arrangement period. The arrangement period indicates a quantity of time units that one mapping mode lasts, or a quantity of time units after which one mapping mode is changed. For example, when the first mapping mode in the plurality of mapping modes is determined, SN satisfies the following condition:

$$\mathrm{floor}\left(\frac{SN}{\mathrm{Period} + z}\right)\bmod 2 = 0$$

Herein, floor indicates a floor function, that is, floor(x) is a maximum integer not greater than x, Period indicates the arrangement period, Period>0 or Period=0, z is greater than or equal to 0, and (Period+z)≠0.

Further, when Period indicates the arrangement period, there may be a correspondence between Period and an arrangement period. For example, (Period+1) is used as an arrangement period. When the first mapping mode in the plurality of mapping modes is determined, SN satisfies the following condition:

$$\mathrm{floor}\left(\frac{SN}{\mathrm{Period} + 1}\right)\bmod 2 = 0$$

For example, if Period is 2, it may indicate that the arrangement period of the plurality of mapping modes is 3. To be specific, the mapping mode is changed once at an interval of three time units. In this case, a change rule of the plurality of mapping modes may be represented as "000111000111...".

Optionally, the arrangement period (Period) may be preset or predefined, or may be determined by using higher layer signaling. Alternatively, the arrangement period may be determined based on the mapping mode information in Implementation 1.

In still another possible design, the mapping apparatus may determine the first mapping mode in the plurality of mapping modes based on the serial number of the time unit, an arrangement period, and a start offset. The start offset is a preset or preconfigured value or indication information. For example, when the first mapping mode in the plurality of mapping modes is determined, SN satisfies the following two conditions.

Condition1:

$$\mathrm{floor}\left(\frac{SN - \mathrm{Offset}}{\mathrm{Period} + 1}\right)\bmod 2 = 0$$

Condition 2: SN≥Offset or SN>Offset.

Herein, Offset is the start offset of the serial number of the time unit. Optionally, when SN<Offset (or SN≤Offset), another mapping mode may be used, or a predefined default mapping mode or the like may be used. It may be learned that a serial number of a superframe at which the first mapping mode in the plurality of mapping modes starts to be used may be adjusted by using the start offset, and the mapping mode may be adjusted more flexibly.

It should be noted that the foregoing uses the floor function as an example for description, and the foregoing design may alternatively be implemented when a ceiling function is used. For example, the ceiling function is ceil(), and a serial number SN of a first time unit may also satisfy the following condition:

$$\text{ceil}\left(\frac{\text{SN} - \text{Offset}}{\text{Period} + 1} - 1\right) \text{mod} 2 = 0$$

In this case, (SN-Offset)/(Period+1) is greater than or equal to 1. The start offset may be any integer.

In a possible implementation, an example in which Offset is 3, Period is 2, and the serial number SN of the time unit gradually increases from 0 is used. In this case, when SN=3, floor[(SN-Offset)/(Period+1)] is 0, and SN≥Offset, the first mapping mode in the plurality of mapping modes is determined.

In a possible design, the serial number SN of the time unit may be a superframe serial number (or referred to as a superframe number). When the superframe number satisfies the following condition:

$$\text{floor}\left(\frac{\text{superframe} - \text{superframeOffset}}{\text{superframePeriod} + 1}\right)$$

is an even number,
the modulation symbols are sequentially mapped, on N scheduled subcarriers, to the N subcarriers in ascending order of indexes of the subcarriers, where superframeOffset indicates a start offset of the superframe number, the superframe number≥superframeoffset or the superframe number>superframeOffset, and superframePeriod indicates the arrangement period of the mapping modes. It should be understood that floor() indicates a floor function, and is merely an example. This application is also applicable to a case in which ceiling is used.

When the superframe number satisfies the following condition:

$$\text{floor}\left(\frac{\text{superframe} - \text{superframeOffset}}{\text{superframePeriod} + 1}\right)$$

is an odd number,
the modulation symbols are first sequentially mapped to $L^{th}$ to $N^{h}$ subcarriers in ascending order of indexes of the subcarriers starting from the $L^{th}$ subcarrier, and then are sequentially mapped to a first to the $L^{th}$ subcarriers in ascending order of indexes of the subcarriers starting from the first scheduled subcarrier, where L<N. Further, L=floor(N/2), or L=ceil[(N/2)-1].

It should be noted that the foregoing subcarrier is a subcarrier scheduled in this superframe. For example, the N subcarriers are scheduled from the M subcarriers to carry the modulation symbol in this superframe. For another example, a plurality of scheduled CP-OFDM symbols are used to carry the modulation symbols in this superframe. The N subcarriers are a plurality of subcarriers corresponding to the scheduled CP-OFDM symbols.

It should be understood that because the offset (the foregoing Offset, or superframeOffset) and/or the arrangement period (Period, or superframePeriod) may be configured by using higher layer signaling, or may be obtained in another calculation manner. The offset and the arrangement period may be different in different times. To be specific, the offset and the arrangement period may be the same or different in the first time unit and in a second time unit.

Implementation 3: The first mapping mode in the plurality of mapping modes is determined by using a redundancy version number of data carried in the time unit. Specifically, the data carried in the time unit corresponds to different redundancy version numbers. For example, there are four redundancy versions, and the plurality of mapping modes include two mapping modes. The four redundancy versions may be identified as: RV 0, RV 1, RV 2, and RV 3. When a mapping mode is determined, the solution shown in Table 3 may be used to determine the mapping mode. It should be noted that Table 3 is displayed as a correspondence for ease of showing the solution. In a specific implementation process, a mapping mode corresponding to a redundancy version number may also be determined as another form.

Table 3 Correspondence between a redundancy version and a mapping mode

|  | First mapping mode | Second mapping mode |
|---|---|---|
| Solution 1 | RV 0, RV 3 | RV 1, RV 2 |
| Solution 2 | RV 0, RV 2 | RV 1, RV 3 |
| Solution 3 | RV 0, RV 1 | RV 2, RV 3 |

For example, Table 4 is a schematic table of a redundancy version and a mapping mode that correspond to a possible superframe according to an embodiment of this application. A correspondence in Solution 1 is used as an example. If the redundancy version number of the data carried in the time unit is RV 0 or RV 1, the first mapping mode in the plurality of mapping modes is determined. If the redundancy version number of the data carried in the time unit is RV 2 and RV 3, the second mapping mode in the plurality of mapping modes is determined. For other redundancy version numbers, deduction may be performed by analogy.

**Table 4 Schematic table of a redundancy version and a mapping mode that correspond to a superframe**

| Mapping mode | 0 | 1 | 1 | 0 | 1 | 0 | ... |
|---|---|---|---|---|---|---|---|
| Superframe serial number | 0 | 1 | 2 | 3 | 5 | 5 | ... |
| Redundancy version number | RV 0 | RV 1 | RV 2 | RV 3 | RV 2 | RV 3 | ... |

Different redundancy version numbers correspond to different retransmission versions. Therefore, determining the mapping mode based on the redundancy version number can change the mapping mode during retransmission, improve a diversity gain, and reduce a quantity of retransmission times. It should be understood that an example in which the plurality of mapping modes include two mapping modes is used herein. This application is also applicable to a case that another quantity of mapping modes are included.

Step S402: The first resource mapping apparatus maps, in the first mapping mode, the first modulation symbol sequence carried in the first time unit.

Specifically, the plurality of modulation symbols in the first modulation symbol sequence are respectively mapped to a plurality of subcarriers in the first mapping mode. Each subcarrier is used to map one modulation symbol. The plurality of subcarriers belong to the foregoing subcarrier set.

For example, refer to FIG. 5A. The first mapping mode represents sequentially mapping the plurality of modulation symbols to the plurality of subcarriers in an order of indexes of the plurality of subcarriers. Each subcarrier is used to map one modulation symbol. In FIG. 5A, an example in which the plurality of modulation symbols are N modulation symbols is used. The N modulation symbols are mapped to N subcarriers. The N subcarriers belong to a set of the M subcarriers.

It should be noted that an example in which an index of a subcarrier is a serial number of the subcarrier is used for description, and another index manner may also be used. In this case, a subcarrier with an index 1 and a subcarrier with an index 2 are not necessarily adjacent subcarriers in frequency domain.

Optionally, the resource mapping method may include steps S403 and S404. Details are as follows.

Step S403: A second resource mapping apparatus determines the first mapping mode in the plurality of mapping modes. Optionally, it may be understood herein that in actual communication, the receiver at which the second resource mapping apparatus is located may not receive a radio signal sent by the transmitter, and therefore there is no related step of demapping.

For ease of description, a resource mapping apparatus at the receiver is referred to as the second resource mapping apparatus. The second resource mapping apparatus is configured for demapping.

Specifically, the first resource mapping apparatus maps the plurality of modulation symbols in the first modulation symbol sequence in the first mapping mode, and the second mapping apparatus correspondingly determines the first mapping mode in the plurality of mapping modes, to receive the first modulation symbol sequence.

In a possible implementation, according to a protocol specification, for the first modulation symbol sequence carried in the first time unit, the second resource mapping apparatus determines the first mapping mode in the plurality of resource mapping modes in a same manner in which the first resource mapping apparatus determines the first mapping mode in the plurality of resource mapping modes, so that the receiver may correspondingly receive the modulation symbols. For detailed descriptions, refer to the related descriptions in step S401.

It should be noted that when the first resource mapping apparatus determines the first mapping mode in the plurality of resource mapping modes based on the first mapping mode information, the transmitter may send the first resource mapping mode information to the receiver, so that the second resource mapping apparatus determines the first mapping mode in the plurality of mapping modes.

Step S404: The second resource mapping apparatus receives, based on the first mapping mode, the first modulation symbol sequence carried in the first time unit.

Specifically, the second resource mapping apparatus receives a carrier, separates the carrier to obtain a plurality of subcarriers, and demaps signals on the subcarriers to obtain the first modulation symbol sequence. The modulation symbol sequence is carried in the first time unit, for example, carried in a first superframe.

According to the embodiment shown in FIG. 4, the mapping apparatus may determine a mapping mode from the plurality of mapping modes when mapping a modulation symbol sequence, thereby improving flexibility of resource mapping. Because the first mapping mode and the second mapping mode represent mapping the plurality of modulation symbols to different subcarrier locations, when channel quality on a specific frequency band is poor, subcarrier locations to which the modulation symbols are mapped can be changed in different mapping modes, to reduce impact of frequency selective fading on data transmission and reduce a quantity of retransmission times and a delay.

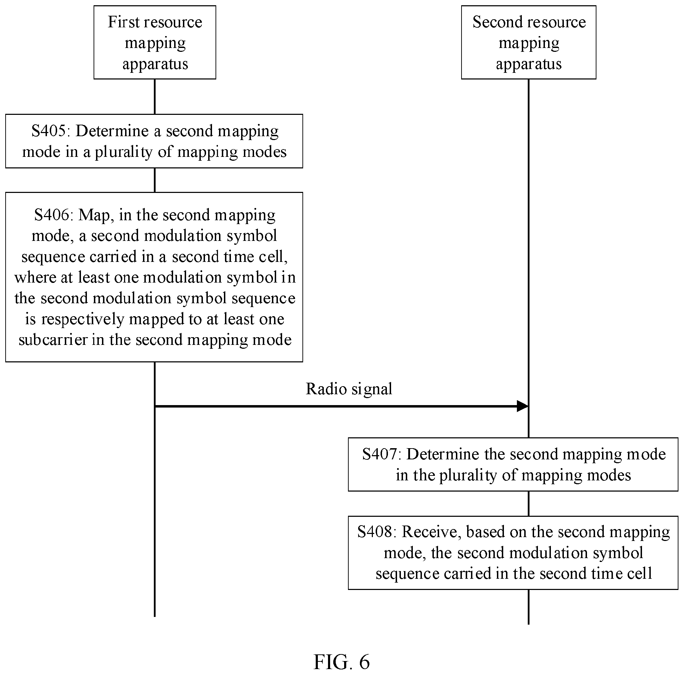

Optionally, refer to FIG. 6. The resource mapping method may include some or all of steps S405 to S408. Details are as follows:

Step S405: The first resource mapping apparatus determines the second mapping mode in the plurality of mapping modes. The plurality of mapping modes further include the foregoing first mapping mode.

Specifically, the first resource mapping apparatus may determine the second mapping mode in the plurality of mapping modes based on at least one of mapping mode information, a second parameter, NACK indication information, and the like. The second parameter may include one or more of a serial number of a time unit, a redundancy version number, and another identifier of the time unit. The serial number of the time unit includes a serial number of a second time unit in the following.

Optionally, second mapping mode information may indicate at least one of a period, an offset, an arrangement, or the like of the plurality of mapping modes.

It should be understood that the first mapping mode information and the second mapping mode information may be same information, or may be different information.

Step S406: The first resource mapping apparatus maps, in the second mapping mode, a second modulation symbol sequence carried in the second time unit.

Specifically, at least one modulation symbol in the second modulation symbol sequence is respectively mapped to at least one subcarrier in the second mapping mode. Each subcarrier is used to map one modulation symbol. The at least one subcarrier belongs to the subcarrier set.

The first mapping mode and the second mapping mode represent different mapping locations of the at least one modulation symbol on the at least one subcarrier.

It should be understood that the different mapping locations may be that mapping locations of at least one modulation symbol are different, or may be that mapping locations of any modulation symbol in the plurality of modulation symbols are different.

For example, the first mapping mode is a mapping mode shown in FIG. 5A. The first mapping mode represents sequentially mapping the at least one modulation symbol to the at least one subcarrier in an order of an index of the at least one subcarrier. Each subcarrier is used to map one modulation symbol. For example, the second mapping mode is a mapping mode shown in FIG. 5C. The first mapping mode represents sequentially mapping the at least one modulation symbol to the at least one subcarrier in an order of an index of the at least one subcarrier. Each subcarrier is used to map one modulation symbol.

For example, the second mapping mode is a mapping mode shown in FIG. 5C, and the at least one subcarrier is D ($0<D$, and D is a natural number) subcarriers. In the second mapping mode, E modulation symbols with a serial number 0 (or a first modulation symbol) to a serial number (E-1) (or an $L^{th}$ modulation symbol) are sequentially mapped to subcarriers in an order of serial numbers of the subcarriers starting from a subcarrier with a serial number (D-E), and (D-E) modulation symbols with a serial number E to a serial number (D-1) are sequentially mapped to subcarriers in an order of serial numbers of the subcarriers starting from a subcarrier with a serial number 0, where $E<D$. It should be noted that a location of a subcarrier may be indicated by using an index of the subcarrier. Herein, an example in which the index of the subcarrier is a serial number of the subcarrier is used for description. This application is also applicable to a case in which another index manner is used.

In a possible design, the first modulation symbol sequence corresponds to first data, and the second time unit is used to carry retransmitted data of the first data. The first modulation symbol sequence is obtained after the first data is modulated (or encoded and modulated). This application provides two possible cases as examples when the first data is sent.

Case 1: The first data is encoded data. The transmitter modulates the first data to obtain the first modulation symbol sequence. The first modulation symbol sequence is carried in the first time unit. In a case in which the receiver feeds back that the first data fails to be received (for example, the receiver feeds back a NACK to the transmitter), the first data fails to be sent, the receiver does not feed back that the first data is successfully received, or the like, the transmitter may send the retransmitted data of the first data (the retransmitted data of the first data may be the same as the first data). The transmitter may modulate the retransmitted data of the first data to obtain the second modulation symbol sequence. The second modulation symbol sequence is carried in the second time unit.

Case 2: The first data is unencoded data. The transmitter encodes the first data to obtain first encoded data, and modulates the first encoded data to obtain the first modulation symbol sequence. The first modulation symbol sequence is carried in the first time unit. In a case in which the receiver feeds back that the first data fails to be received, the first data fails to be sent, the receiver does not feed back that the first data is successfully received, or the like, the transmitter may send the retransmitted data of the first data. During retransmission, the transmitter may re-encode the first data to obtain second encoded data (this application is also applicable to a case in which re-encoding is not performed), and modulate the second encoded data to obtain the second modulation symbol sequence. The second modulation symbol sequence is carried in the second time unit.

Optionally, in Case 2, a re-encoding mode for retransmitting the first data may be the same as an encoding mode for initial transmission. In this case, the second encoded data may be the same as the first encoded data.

Because the mapping mode of the second modulation symbol sequence is different from that of the first modulation symbol sequence, for a modulation symbol at a same location, when the second modulation symbol sequence is mapped, the modulation symbol may be mapped to different subcarriers. Therefore, the impact of frequency selective fading on data transmission is reduced, the quantity of data retransmission times can be effectively reduced, and the delay can be reduced.

It should be noted that because the at least one subcarrier is a subcarrier scheduled for transmitting the second modulation symbol sequence, a quantity of subcarriers (and/or locations of subcarriers) scheduled in the first time unit may be the same as or different from a quantity of subcarriers (and/or locations of subcarriers) scheduled in the second time unit. Therefore, a quantity of modulation symbols in the second modulation symbol sequence may be the same as or different from a quantity of modulation symbols in the first modulation symbol sequence. Further, optionally, the quantity of modulation symbols may be determined based on a quantity of currently scheduled subcarriers.

Step S407: The second resource mapping apparatus determines the second mapping mode in the plurality of mapping modes.

For details, refer to the related descriptions in step S403 and step S405.

Step S408: The second resource mapping apparatus receives, based on the first mapping mode, the first modulation symbol sequence carried in the first time unit.

For details, refer to the related descriptions in step S404.

In a possible design, the plurality of mapping modes further include the third mapping mode. The first resource mapping apparatus may determine the third mapping mode in the plurality of mapping modes, and map, in the third mapping mode, a third modulation symbol sequence carried in a third time unit. P modulation symbols in the third modulation symbol sequence are respectively mapped to P subcarriers in the third mapping mode. The P subcarriers belong to the subcarrier set. The third mapping mode, the first mapping mode, and the second mapping mode represent different locations of the P modulation symbols on the P subcarriers. P is a natural number not less than 1.

It should be understood that the different mapping locations may be that mapping locations of at least one modulation symbol are different, or may be that mapping locations of any modulation symbol in the plurality of modulation symbols are different.

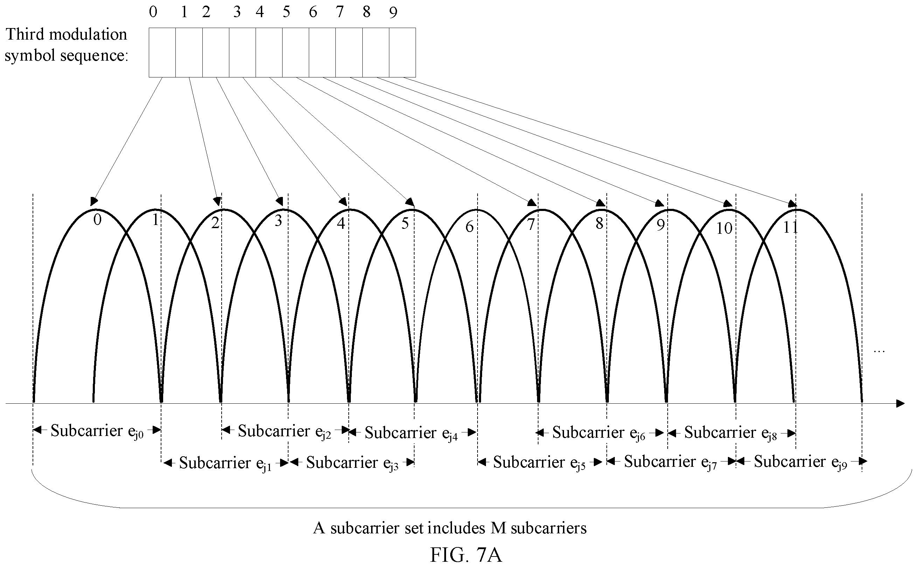

This application provides a possible case as an example. FIG. 7A is a possible schematic diagram of mapping the third modulation symbol sequence in the first mapping mode according to this application. The subcarrier set includes M subcarriers. The third modulation symbol sequence includes 10 (merely as an example) modulation symbols. Subcarriers scheduled at the MAC layer are subcarriers with a serial number 0, a serial number 2, a serial number 3, a serial number 4, a serial number 5, a serial number 7, a serial number 8, a serial number 9, a serial number 10, and a serial number 11. Locations of the subcarriers may be indicated by using an index $e_{ji}$ ($0 \leq i \leq P$ - 1) (P=10 in FIG. 7A). In the first mapping mode, the 10 modulation symbols in the third modulation symbol sequence are respectively mapped to the subcarriers corresponding to $e_{j0}$ to $e_{j9}$ in an order of indexes of the subcarriers.

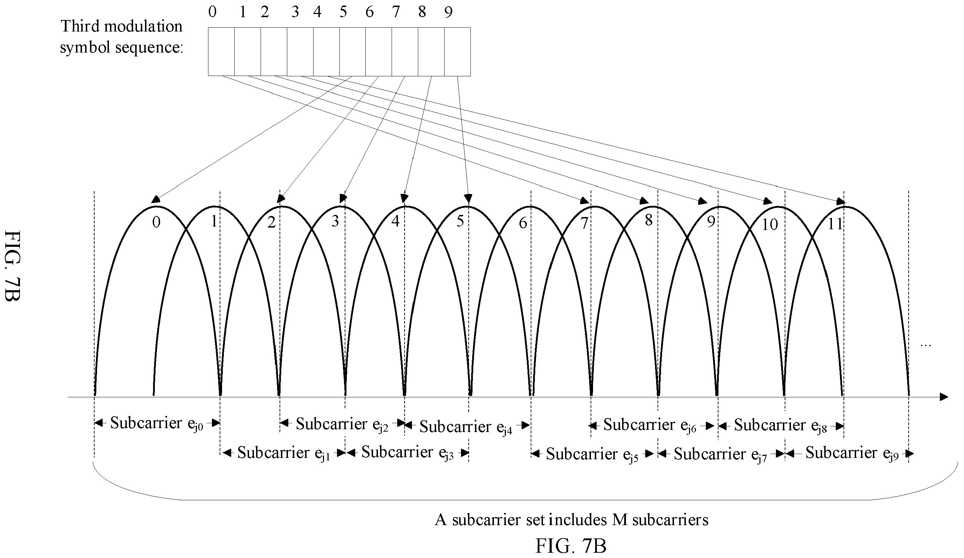

The second mapping mode represents: sequentially mapping a modulation symbol with a serial number 0 (or a first modulation symbol) to a modulation symbol with a serial number (L-1) (or an $L^{th}$ modulation symbol) to subcarriers in an order of indexes of the subcarriers starting from a subcarrier with a serial number (P-L), and sequentially mapping modulation symbols with a serial number L to a serial number (P-1) to subcarriers in an order of indexes of the subcarriers starting from a subcarrier with a serial number 0, where L<P. FIG. 7B is a possible schematic diagram of mapping the third modulation symbol sequence in the second mapping mode according to an embodiment of this application. For example, P is 10, and L=5. Subcarriers with a serial number 0 to a serial number 4 are respectively mapped to the subcarriers corresponding to $e_{j0}$ to $e_{j4}$, and subcarriers with a serial number 5 to a serial number 9 are respectively mapped to the subcarriers corresponding to $e_{j5}$ to $e_{j9}$.

The third mapping mode represents dividing a plurality of modulation symbols in a modulation symbol sequence into one or more groups. Each group includes at least two symbols. Mapping locations on subcarriers are changed in each group. For example, refer to FIG. 7B. The 10 modulation symbols in the third modulation symbol sequence are divided into five groups, and subcarrier locations to which modulation symbols in each group are mapped are changed. It may be learned that the modulation symbol with the serial number 0 is mapped to a subcarrier corresponding to $e_{j1}$. A modulation symbol with a sequence number 1 is mapped to a subcarrier corresponding to $e_{j0}$. Similarly, a modulation symbol with a serial number 2 is mapped to a subcarrier corresponding to $e_{j3}$. A modulation symbol with a serial number 3 is mapped to a subcarrier corresponding to $e_{j2}$. For the other groups, deduction may be performed by analogy.

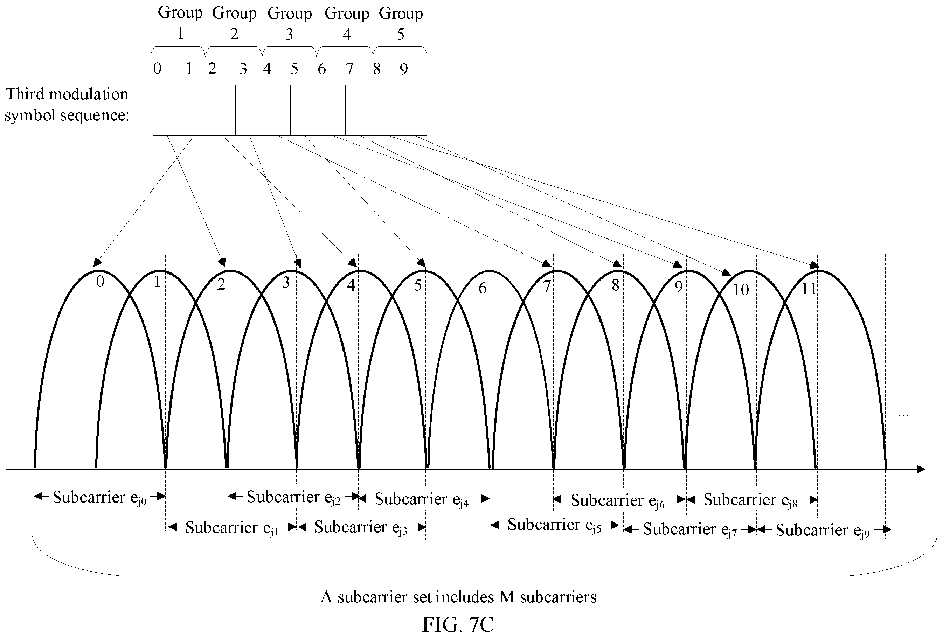

With the possible first mapping mode, second mapping mode, and third mapping mode that are shown in FIG. 7A, FIG. 7B, and FIG. 7C, the P modulation symbols in the third modulation symbol sequence are mapped to different locations on the P subcarriers. Because the third mapping mode is used to map the third modulation symbol sequence, which is different from the mapping modes of the second modulation symbol sequence and the first modulation symbol sequence, for a modulation symbol at a same location, when the third modulation symbol sequence is mapped, the modulation symbol may be mapped to different subcarriers. Therefore, the impact of frequency selective fading on data transmission is reduced, the diversity gain is improved, the quantity of data retransmission times can be effectively reduced, and the delay can be reduced.

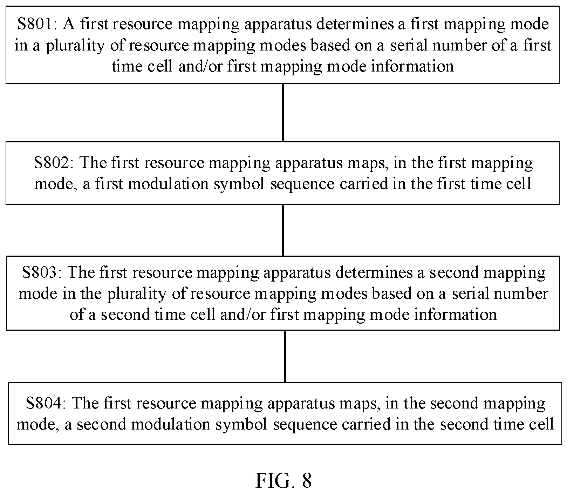

The foregoing method embodiment shown in FIG. 4 or FIG. 6 includes many possible implementation solutions. The following respectively describes, by using examples, some implementation solutions with reference to FIG. 8. It should be noted that, for related concepts, operations, or logical relationships that are not explained in FIG. 8, refer to corresponding descriptions in the embodiment shown in FIG. 4 or FIG. 6. Details are not described again.

FIG. 8 is a flowchart of still another resource mapping method according to an embodiment of this application. In the embodiment shown in FIG. 8, code block group (code block group, CBG) hybrid retransmission supporting HARQ is used as an example to describe a possible resource mapping method. A CBG is obtained by combining one or more code blocks (code blocks, CBs). During data transmission, data (or referred to as a code word) in the CBG is modulated to obtain a modulation symbol, and one or more modulation symbol sequences are formed and mapped to corresponding subcarriers for transmission.

CBG hybrid retransmission means that transmitted data carried in a time unit includes both an initially transmitted transport block (transport block, TB, where one TB includes a plurality of CBGs) and a retransmitted TB. Optionally, when a TB is retransmitted, a quantity of code block segments of the TB is the same as a quantity of code block segments of the TB during initial transmission (or when the TB is transmitted last time).

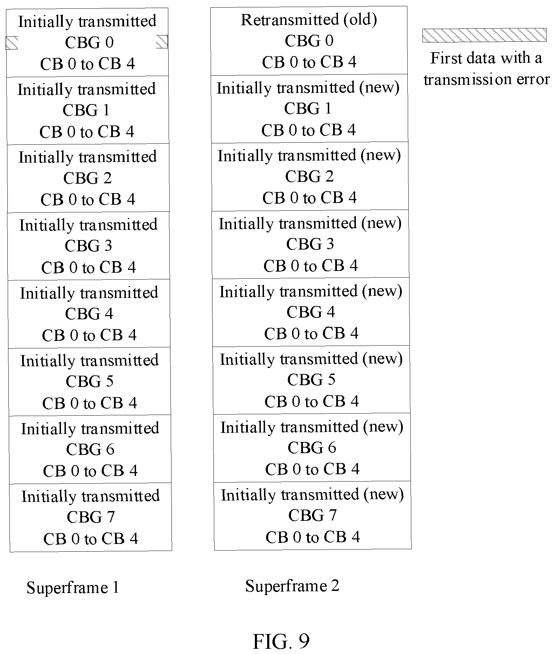

FIG. 9 is a schematic diagram of a resource mapping method according to an embodiment of this application. For example, the time unit is a superframe. Data carried in a superframe 1 includes eight initially transmitted CBGs. An error occurs in transmission of first data when a CBG 0 is transmitted. The CBG 0 including the data with the error is retransmitted in a superframe 2. It may be learned from FIG. 9 that data carried in the superframe 2 includes both a new CBG that is initially transmitted and a retransmitted CBG, that is, hybrid retransmission is performed.

The method shown in FIG. 8 may include the following steps.

Step S801: The first resource mapping apparatus determines the first mapping mode in the plurality of resource mapping modes based on the serial number of the first time unit and/or the first mapping mode information.

For related descriptions, refer to the detailed descriptions in step S401.

Step S802: The first resource mapping apparatus maps, in the first mapping mode, the first modulation symbol sequence carried in the first time unit.

For related descriptions, refer to the detailed descriptions in step S401.

Step S803: The first resource mapping apparatus determines the second mapping mode in the plurality of resource mapping modes based on the serial number of the second time unit and/or the second mapping mode information.

For related descriptions, refer to the detailed descriptions in step S405.

Step S804: The first resource mapping apparatus maps, in the second mapping mode, the second modulation symbol sequence carried in the second time unit.

For related descriptions, refer to the detailed descriptions in step S406. In the flowchart shown in FIG. 8, only a resource mapping mode at the transmitter is used as an example. The receiver may correspondingly determine the mapping mode for demapping. Details are not described herein again.

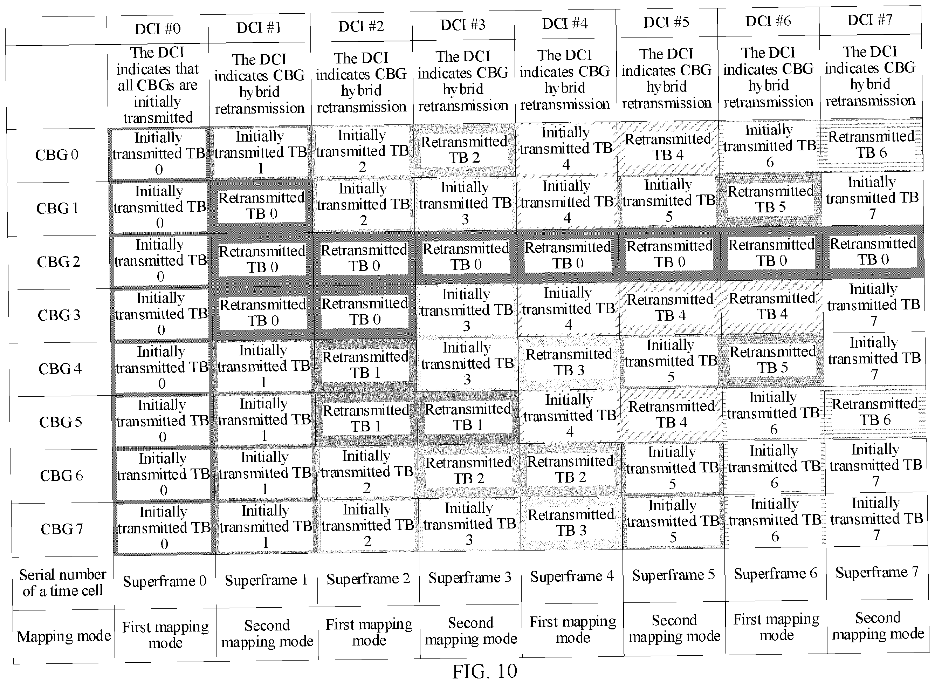

For a plurality of other time units, deduction may be performed by analogy. FIG. 10 is a schematic diagram of a possible resource mapping mode according to an embodiment of this application. For example, the time unit is a superframe, and the plurality of mapping modes include two mapping modes. An odd superframe corresponds to the first mapping mode, and an even superframe corresponds to the second mapping mode. As shown in FIG. 10, eight CBGs carried in a superframe 0 correspond to a transport block TB 0, and each CBG is initially transmitted data. Eight corresponding CBGs carried in a superframe 1 include both retransmitted CBGs of the TB 0 and initially transmitted CBGs of a TB 1. During mapping, a modulation symbol sequence carried in the superframe 0 is mapped by the first mapping mode, and a modulation symbol sequence carried in the superframe 1 is mapped by the first mapping mode. Because the first mapping mode and the second mapping mode represent mapping a plurality of modulation symbols to different subcarrier locations, in the retransmitted CBG, for a modulation symbol to which an error occurs last time, a subcarrier to which the modulation symbol is mapped may be changed. Therefore, impact of frequency selective fading on data transmission may be reduced, a quantity of retransmission times and a delay may be reduced, and data transmission efficiency may be improved.

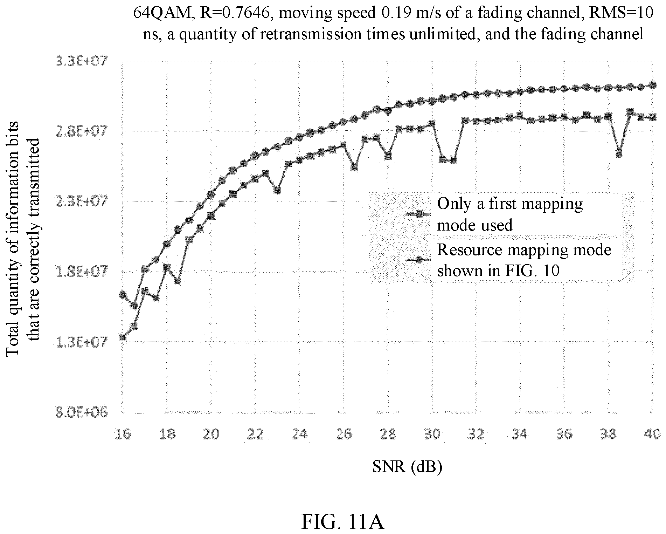

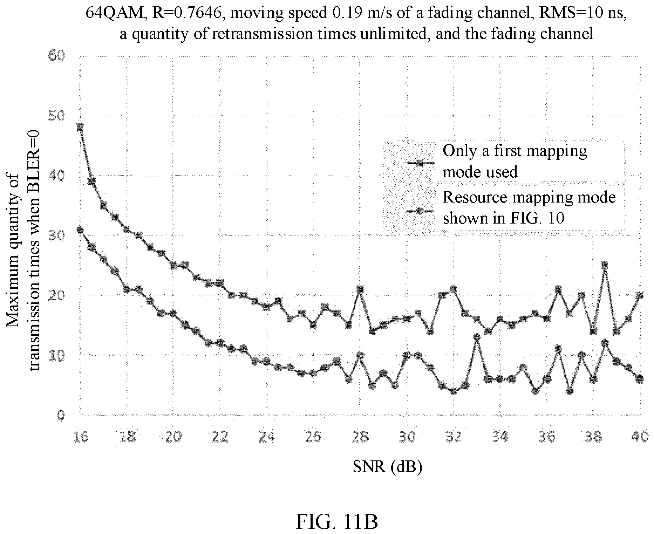

FIG. 11A and FIG. 11B are schematic diagrams of performance of a possible resource mapping method according to an embodiment of this application. Parameters for simulation comparison are as follows: A modulation mode is 64-quadrature amplitude modulation (Quadrature Amplitude Modulation, QAM), a code rate (R) is 0.7646, a quantity of REs obtained through encoding is 14592, an encoding mode is polar-code-based encoding, a moving speed of a fading channel is 0.19 m/s, and a root mean square (Root Mean Square, RMS) delay spread is 10 ns. FIG. 11B indicates maximum quantities of transmission times on channels with different SNRs when a required block error rate (block error rate, BLER) is 0.

It may be learned that comparison between the resource mapping mode shown in FIG. 10 and use of a same mapping mode in each retransmission (for example, use of the first mapping mode in each retransmission) shows that, according to the method provided in this application, the data transmission efficiency may be improved, the quantity of retransmission times can be effectively reduced, and the transmission delay can be reduced.

In a possible design, when a mapping mode is determined, mapping mode information may be determined based on a quantity of HARQ processes, and one of the plurality of mapping modes is determined based on the mapping mode information and/or a serial number of a time unit. The quantity of HARQ processes indicates a quantity of concurrent HARQ processes. In some scenarios, the quantity of HARQ processes may indicate an interval between a time unit corresponding to retransmitted data and a time unit corresponding to initially transmitted data. For example, in a possible scenario, the transmitter sends new data in the superframe 0, sends new data in the superframe 1, sends new data in the superframe 2, receives ACK/NACK information fed back by a terminal, and sends retransmitted old data in a superframe 4. In this case, the quantity of HARQ processes is 3.

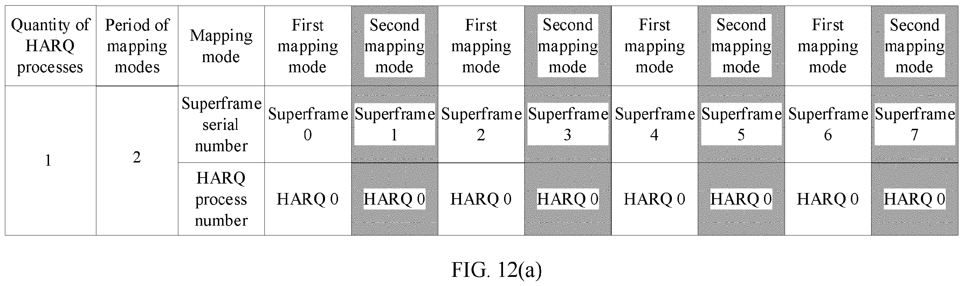

For example, FIG. 12(a) to FIG. 12(d) are schematic diagrams of determining the mapping mode information based on the quantity of HARQ processes. For example, the plurality of mapping modes include two mapping modes. Refer to FIG. 12(a). When the quantity of HARQ processes is 1, the period of the mapping modes is 2. If 0 indicates the first mapping mode, and 1 indicates the second mapping mode, a regular period of the mapping modes is "01", or may be represented as "0101010101010...". The second mapping mode is used for an odd superframe, and the first mapping mode is used for an even superframe.

In a possible design, if the quantity of HARQ processes is 1, it indicates that an interval between a serial number of a superframe carrying retransmitted data and a serial number of a superframe carrying initially transmitted data is 1. For example, if the transmitter sends a piece of initially transmitted data in the superframe 0, a HARQ process number is 0, indicating that there is one concurrent process. The transmitter may receive an ACK/NACK from the receiver. If receiving the NACK from the receiver, the transmitter may retransmit the data in the superframe 1, and the quantity of HARQ processes is 1. In this case, the period of the mapping modes may be 2, indicating that the mapping mode is changed at an interval of one superframe, so that different mapping modes are used for the retransmitted data and the initially transmitted data. Therefore, the diversity gain is improved, and the quantity of retransmission times is reduced.

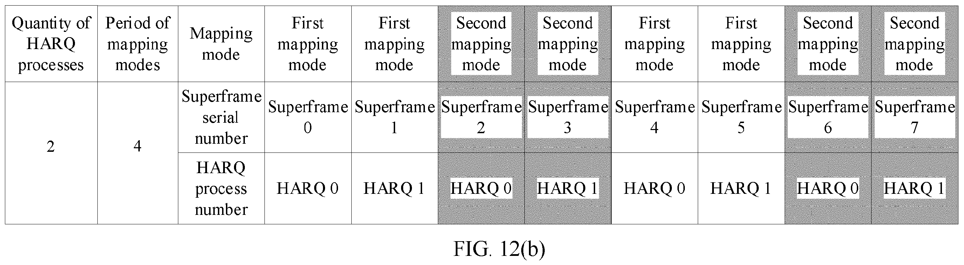

Similarly, refer to FIG. 12(b). When the quantity of HARQ processes is 2, the period of the mapping modes is 4. If 0 indicates the first mapping mode, and 1 indicates the second mapping mode, a regular period of the mapping modes is "0011", or may be represented as "001100110011...". The mapping apparatus may change the mapping mode at an interval of two superframes, thereby improving the diversity gain and reducing the quantity of retransmission times.

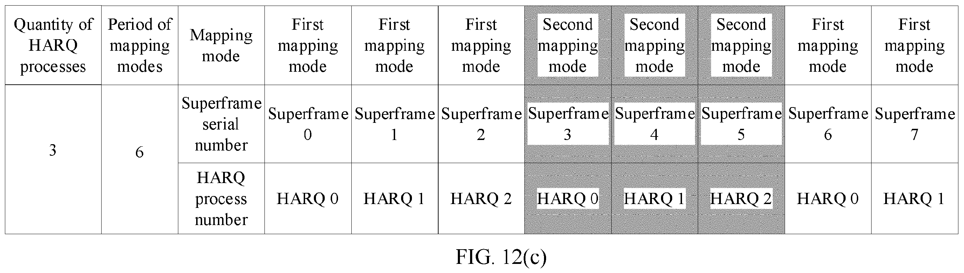

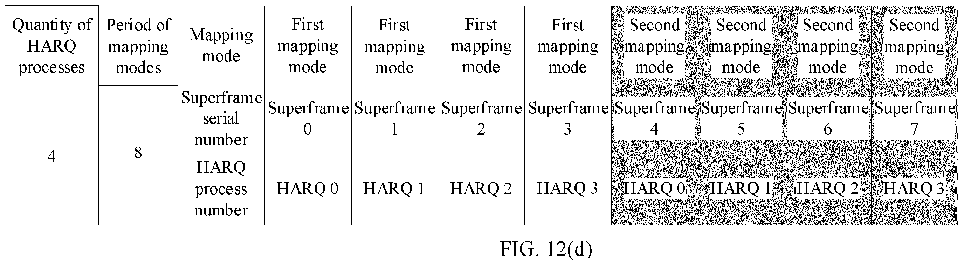

By analogy, refer to FIG. 12(c). When the quantity of HARQ processes is 3, the period of the mapping modes is 6. Refer to FIG. 12(d). When the quantity of HARA processes is 4, the period of the mapping modes is 8.

The foregoing describes in detail the method in embodiments of this application. The following provides an apparatus in embodiments of this application.

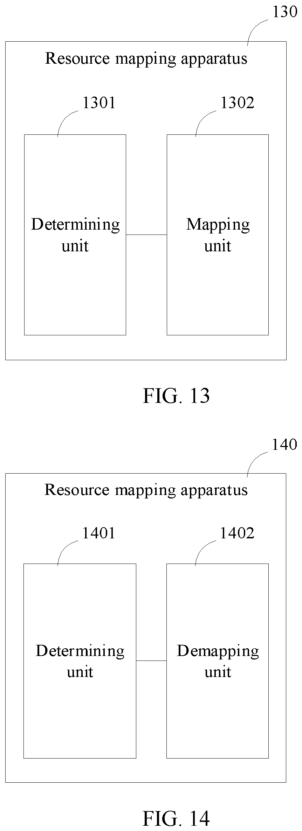

FIG. 13 is a schematic diagram of a structure of a resource mapping apparatus 130 according to an embodiment of this application. For example, the apparatus 130 may be an independent device, or may be a component in an independent device, for example, a chip or an integrated circuit. The apparatus 130 may include a determining unit 1301 and a mapping unit 1302. The apparatus 130 is configured to implement the foregoing resource mapping method, for example, the resource mapping method in the embodiment shown in FIG. 4, FIG. 6, or FIG. 8.

In a possible implementation, the determining unit 1301 is configured to determine a first mapping mode in a plurality of mapping modes. The plurality of mapping modes further include a second mapping mode.

The mapping unit 1302 is configured to map, by the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In still another possible implementation, the first mapping mode and the second mapping mode represent different mapping locations of a first modulation symbol on the plurality of subcarriers, and the first modulation symbol is R modulation symbols of the plurality of modulation symbols, where $0<R\leq N$, and N is a quantity of modulation symbols included in the plurality of modulation symbols.

In still another possible implementation, the determining unit 1301 is further configured to determine the second mapping mode in the plurality of mapping modes.

The mapping unit 1302 is further configured to map, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation, the first modulation symbol sequence corresponds to first data, and the second time unit is used to carry retransmitted data of the first data.

In still another possible implementation, the determining unit 1301 is further configured to determine the second mapping mode in the plurality of mapping modes based on a second parameter and/or second mapping mode information. The second parameter includes a serial number of the second time unit or a redundancy version number of data carried in the second time unit.

In still another possible implementation, the second mapping mode information indicates at least one of an arrangement, a period, or an offset in a period of the plurality of mapping modes.

In still another possible implementation, the second mapping mode information is determined in at least one of the following manners: through presetting, by using higher layer signaling, or by using a quantity of hybrid automatic repeat request HARQ processes.

In still another possible implementation, the determining unit 1301 is further configured to:

determine the first mapping mode in the plurality of mapping modes based on a first parameter and/or first mapping mode information, where the first parameter includes a serial number of the first time unit or a redundancy version number of data carried in the first time unit.

In still another possible implementation, the first mapping mode information indicates at least one of an arrangement, a period, or an offset in a period of the plurality of mapping modes.

In still another possible implementation, the first mapping mode information is determined in at least one of the following manners: through presetting, by using higher layer signaling, or by using a quantity of hybrid automatic repeat request HARQ processes.

In still another possible implementation, the higher layer signaling includes one or more of broadcast information, system information, higher layer configuration signaling, MAC layer signaling, and the like.

In still another possible implementation, the first mapping mode represents sequentially mapping the plurality of modulation symbols to the plurality of subcarriers in an order of indexes of the plurality of subcarriers.

In still another possible implementation, the serial number SN of the first time unit satisfies the following two conditions.

Condition 1:

$$\text{floor}\left(\frac{\text{SN} - \text{Offset}}{\text{Period} + 1}\right)$$

is an even number.

Herein, $\text{SN} \geq 0$, floor() is a floor function, Offset is a start offset of the serial number of the first time unit, Period indicates an arrangement period of the plurality of mapping modes, and Period>0 or Period=0.

Condition 2: $\text{SN} \geq \text{Offset}$ or $\text{SN} > \text{Offset}$. For each parameter, refer to the foregoing descriptions.

In still another possible implementation, Condition 1 may alternatively be represented as:

$$\text{floor}\left(\frac{\text{SN} - \text{Offset}}{\text{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set.

The foregoing uses the floor function as an example for description. This application is also applicable to a case in which a ceiling function is used. For example, the ceiling function is ceil(), and the serial number SN of the first time unit may also satisfy the following condition:

$$\text{ceil}\left(\frac{\text{SN} - \text{Offset}}{\text{Period} + 1} - 1\right)$$

is an even number.

In still another possible implementation, the plurality of modulation symbols include N modulation symbols, and N is a natural number greater than 1. The second mapping mode represents:

mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, where L<N.

In still another possible implementation, the serial number SN2 of the second time unit satisfies the following two conditions.

Condition 1:

$$\mathrm{floor}\left(\frac{\mathrm{SN2} - \mathrm{Offset2}}{\mathrm{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period2>0 or Period2=0.

Condition 2: SN2≥Offset2 or SN2>Offset2. For each parameter, refer to the foregoing descriptions. It should be noted that the foregoing describes a case in which the start offset exists. In a specific implementation process, this application is also applicable to a case in which the start offset is not set.

In still another possible implementation, the plurality of mapping modes further include a third mapping mode. The determining unit 1301 is further configured to determine the third mapping mode in the plurality of mapping modes.

The mapping unit 1302 is further configured to map, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

It should be noted that implementation of each unit may correspond to corresponding descriptions in the embodiment shown in FIG. 4, FIG. 6, or FIG. 8. The apparatus 130 may be the first resource mapping apparatus in the embodiment shown in FIG. 4, FIG. 6, or FIG. 8.

It should be understood that in each apparatus embodiment of this application, division into a plurality of units or modules is merely logical division based on functions, and is not intended to limit a specific structure of the apparatus. During specific implementation, some function modules may be subdivided into more fine function modules, and some function modules may be combined into one function module. However, regardless of whether the function modules are subdivided or combined, general processes performed by the apparatus 130 in a resource mapping process are the same. Generally, each unit corresponds to respective program code (or program instructions). When the program code corresponding to the unit runs on a processor, the unit performs a corresponding process under control of the processor, to implement a corresponding function.

FIG. 14 is a schematic diagram of a structure of a resource mapping apparatus 140 according to an embodiment of this application. For example, the apparatus 140 may be an independent device, or may be a component in an independent device, for example, a chip or an integrated circuit. The apparatus 140 may include a determining unit 1401 and a demapping unit 1402. The apparatus 140 is configured to implement the foregoing resource mapping method, for example, the resource mapping method in the embodiment shown in FIG. 4, FIG. 6, or FIG. 8.

In a possible implementation, the determining unit 1401 is configured to determine a first mapping mode in a plurality of mapping modes. The plurality of mapping modes further include a second mapping mode.

The demapping unit 1402 is configured to receive, by the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In still another possible implementation, the first mapping mode and the second mapping mode represent different mapping locations of a first modulation symbol on the plurality of subcarriers, and the first modulation symbol is R modulation symbols of the plurality of modulation symbols, where 0<R≤N, and N is a quantity of modulation symbols included in the plurality of modulation symbols.

In still another possible implementation, the determining unit 1401 is further configured to determine the second mapping mode in the plurality of mapping modes.

The demapping unit 1402 is further configured to map, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation, the first modulation symbol sequence corresponds to first data, and the second time unit is used to carry retransmitted data of the first data.

In still another possible implementation, the determining unit 1401 is further configured to determine the second mapping mode in the plurality of mapping modes based on a second parameter and/or second mapping mode information. The second parameter includes a serial number of the second time unit or a redundancy version number of data carried in the second time unit.

In still another possible implementation, the second mapping mode information indicates at least one of an arrangement, a period, or an offset in a period of the plurality of mapping modes.

In still another possible implementation, the second mapping mode information is determined in at least one of the following manners: through presetting, by using higher layer signaling, or by using a quantity of hybrid automatic repeat request HARQ processes.

In still another possible implementation, the determining unit 1401 is further configured to:

determine the first mapping mode in the plurality of mapping modes based on a first parameter and/or first mapping mode information, where the first parameter includes a serial number of the first time unit or a redundancy version number of data carried in the first time unit.

In still another possible implementation, the first mapping mode information indicates at least one of an arrangement, a period, or an offset in a period of the plurality of mapping modes.

In still another possible implementation, the first mapping mode information is determined in at least one of the following manners: through presetting, by using higher layer signaling, or by using a quantity of hybrid automatic repeat request HARQ processes.

In still another possible implementation, the higher layer signaling includes one or more of broadcast information, system information, higher layer configuration signaling, MAC layer signaling, and the like.

In still another possible implementation, the first mapping mode represents sequentially mapping the plurality of modulation symbols to the plurality of subcarriers in an order of indexes of the plurality of subcarriers.

In still another possible implementation, the serial number SN of the first time unit satisfies the following two conditions.

Condition 1:

$$\text{floor}\left(\frac{\text{SN} - \text{Offset}}{\text{Period} + 1}\right)$$

is an even number.

Herein, SN≥0, floor() is a floor function, Offset is a start offset of the serial number of the first time unit, Period indicates an arrangement period of the plurality of mapping modes, and Period>0 or Period=0.

Condition 2: SN≥Offset or SN>Offset. For each parameter, refer to the foregoing descriptions. In still another possible implementation, Condition 1 may alternatively be represented as:

$$\text{floor}\left(\frac{\text{SN} - \text{Offset}}{\text{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set.

The foregoing uses the floor function as an example for description. This application is also applicable to a case in which a ceiling function is used. For example, the ceiling function is ceil(), and the serial number SN of the first time unit may also satisfy the following condition:

$$\text{ceil}\left(\frac{\text{SN} - \text{Offset}}{\text{Period} + 1} - 1\right)$$

is an even number.

In still another possible implementation, the plurality of modulation symbols include N modulation symbols, and N is a natural number greater than 1. The second mapping mode represents:

mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, where L<N.

In still another possible implementation, the serial number SN2 of the second time unit satisfies the following two conditions.

Condition 1:

$$\text{floor}\left(\frac{\text{SN2} - \text{Offset2}}{\text{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period2>0 or Period2=0.

Condition 2: SN2≥Offset2 or SN2>Offset2. For each parameter, refer to the foregoing descriptions. It should be noted that the foregoing describes a case in which the start offset exists. In a specific implementation process, this application is also applicable to a case in which the start offset is not set.

In still another possible implementation, the plurality of mapping modes further include a third mapping mode. The determining unit 1401 is further configured to determine the third mapping mode in the plurality of mapping modes.

The demapping unit 1402 is further configured to receive, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

It should be noted that implementation of each unit may correspond to corresponding descriptions in the embodiment shown in FIG. 4, FIG. 6, or FIG. 8. The apparatus 140 may be the second resource mapping apparatus in the embodiment shown in FIG. 4 or FIG. 6.

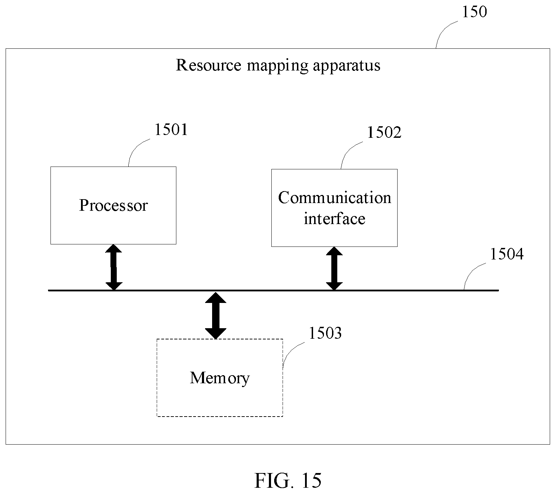

FIG. 15 is a schematic diagram of a structure of a resource mapping apparatus 150 according to an embodiment of this application. For example, the resource mapping apparatus 150 may be an independent device (for example, one of a node and a terminal), or may be a component in an independent device, for example, a chip or an integrated circuit. The resource mapping apparatus 150 may include at least one processor 1501 and a communication interface 1502. Further, optionally, the resource mapping apparatus 150 may further include at least one memory 1503. Furthermore, optionally, a bus 1504 may further be included. The processor 1501, the communication interface 1502, and the memory 1503 are connected through the bus 1504.

The processor 1501 is a module that performs an arithmetic operation and/or a logic operation, and may specifically be one or a combination of processing modules such as a central processing unit (central processing unit, CPU), a graphics processing unit (graphics processing unit, GPU), a microprocessor (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit to complete corresponding processing and application), and a microcontroller unit (Microcontroller Unit, MCU).

The communication interface 1502 may be configured to provide an information input or output for the at least one processor; and/or the communication interface 1502 may be configured to receive data sent from the outside and/or send data to the outside, and may be a wired link interface including an Ethernet cable or the like, or may be a wireless link (Wi-Fi, Bluetooth, universal wireless transmission, an on-board short-range communication technology, or the like) interface. Optionally, the communication interface 1502 may further include a transmitter (for example, a radio frequency transmitter or an antenna), a receiver, or the like coupled to an interface.

The memory 1503 is configured to provide storage space. The storage space may store data such as an operating system and a computer program. The memory 1503 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The at least one processor 1501 in the apparatus 150 is configured to invoke the computer program stored in the at least one memory 1503, to perform the foregoing resource mapping method, for example, the resource mapping method described in the embodiment shown in FIG. 4, FIG. 6, or FIG. 8.

In a design, the apparatus 150 may be the first resource mapping apparatus in the embodiment shown in FIG. 4, FIG. 6, or FIG. 8.

In a possible implementation, the processor 1501 in the apparatus 150 is configured to invoke a computer program stored in the at least one memory 1503, to perform the following operations:

determining a first mapping mode in a plurality of mapping modes, where the plurality of mapping modes further include a second mapping mode; and

mapping, in the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In still another possible implementation, the first mapping mode and the second mapping mode represent different mapping locations of a first modulation symbol on the plurality of subcarriers, and the first modulation symbol is R modulation symbols of the plurality of modulation symbols, where $0 < R \leq N$, and N is a quantity of modulation symbols included in the plurality of modulation symbols.

In still another possible implementation, the processor 1501 is further configured to:

determine the second mapping mode in the plurality of mapping modes; and

map, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation, the first modulation symbol sequence corresponds to first data, and the second time unit is used to carry retransmitted data of the first data.

In still another possible implementation, the processor 1501 is further configured to determine the second mapping mode in the plurality of mapping modes based on a second parameter and/or second mapping mode information. The second parameter includes a serial number of the second time unit or a redundancy version number of data carried in the second time unit.

In still another possible implementation, the second mapping mode information indicates at least one of an arrangement, a period, or an offset in a period of the plurality of mapping modes.

In still another possible implementation, the second mapping mode information is determined in at least one of the following manners: through presetting, by using higher layer signaling, or by using a quantity of hybrid automatic repeat request HARQ processes.

In still another possible implementation, the processor 1501 is further configured to determine the first mapping mode in the plurality of mapping modes based on a first parameter and/or first mapping mode information. The first parameter includes a serial number of the first time unit or a redundancy version number of data carried in the first time unit.

In still another possible implementation, the first mapping mode information indicates at least one of an arrangement, a period, or an offset in a period of the plurality of mapping modes.

In still another possible implementation, the first mapping mode information is determined in at least one of the following manners: through presetting, by using higher layer signaling, or by using a quantity of hybrid automatic repeat request HARQ processes.

In still another possible implementation, the higher layer signaling includes one or more of broadcast information, system information, higher layer configuration signaling, MAC layer signaling, and the like.

In still another possible implementation, the first mapping mode represents sequentially mapping the plurality of modulation symbols to the plurality of subcarriers in an order of indexes of the plurality of subcarriers.

In still another possible implementation, the serial number SN of the first time unit satisfies the following two

conditions.

Condition 1:

$$\text{floor}\left(\frac{\text{SN} - \text{Offset}}{\text{Period} + 1}\right)$$

is an even number.

Herein, SN≥0, floor() is a floor function, Offset is a start offset of the serial number of the first time unit, Period indicates an arrangement period of the plurality of mapping modes, and Period>0 or Period=0.

Condition 2: SN≥Offset or SN>Offset. For each parameter, refer to the foregoing descriptions.

In still another possible implementation, Condition 1 may alternatively be represented as:

$$\text{floor}\left(\frac{\text{SN} - \text{Offset}}{\text{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set.

The foregoing uses the floor function as an example for description. This application is also applicable to a case in which a ceiling function is used. For example, the ceiling function is ceil(), and the serial number SN of the first time unit may also satisfy the following condition:

$$\text{ceil}\left(\frac{\text{SN} - \text{Offset}}{\text{Period} + 1} - 1\right)$$

is an even number.

In still another possible implementation, the plurality of modulation symbols include N modulation symbols, and N is a natural number greater than 1. The second mapping mode represents:

mapping first to $L^{\text{th}}$ modulation symbols to subcarriers in an order of indexes of the subcarriers starting from an index of an $(N-L+1)^{\text{th}}$ subcarrier, and mapping $(L+1)^{\text{th}}$ to $N^{\text{th}}$ modulation symbols to subcarriers in an order of indexes of the subcarriers starting from an index of a first subcarrier, where L<N.

In still another possible implementation, the serial number SN2 of the second time unit satisfies the following two conditions.

Condition 1:

$$\text{floor}\left(\frac{\text{SN2} - \text{Offset2}}{\text{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period2>0 or Period2=0.

Condition 2: SN2≥Offset2 or SN2>Offset2. For each parameter, refer to the foregoing descriptions. It should be noted that the foregoing describes a case in which the start offset exists. In a specific implementation process, this application is also applicable to a case in which the start offset is not set.

In still another possible implementation, the plurality of mapping modes further include a third mapping mode. The processor 1501 is further configured to:

determine the third mapping mode in the plurality of mapping modes; and
map, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

In still another design, the apparatus 150 may be the second resource mapping apparatus in the embodiment shown in FIG. 4, FIG. 6, or FIG. 8.

In a possible implementation, the processor 1501 in the apparatus 150 is configured to invoke a computer program stored in the at least one memory 1503, to perform the following operations:

determining a first mapping mode in a plurality of mapping modes, where the plurality of mapping modes further include a second mapping mode; and
receiving, by the first mapping mode, a first modulation symbol sequence carried in a first time unit.

A plurality of modulation symbols in the first modulation symbol sequence are respectively mapped to a plurality of subcarriers in the first mapping mode. Each subcarrier is used to map one modulation symbol. The plurality of subcarriers belong to a subcarrier set.

The first mapping mode and the second mapping mode represent different mapping locations of the plurality of modulation symbols on the plurality of subcarriers.

In still another possible implementation, the first mapping mode and the second mapping mode represent different mapping locations of a first modulation symbol on the plurality of subcarriers, and the first modulation symbol is R modulation symbols of the plurality of modulation symbols, where $O<R\leq N$, and N is a quantity of modulation symbols included in the plurality of modulation symbols.

In still another possible implementation, the processor 1501 is further configured to:

determine the second mapping mode in the plurality of mapping modes; and
receive, in the second mapping mode, a second modulation symbol sequence carried in a second time unit.

At least one modulation symbol in the second modulation symbol sequence is respectively mapped to at least one subcarrier in the second mapping mode. The at least one subcarrier belongs to the subcarrier set.

The first mapping mode and the second mapping mode represent different mapping locations of the at least one modulation symbol on the at least one subcarrier.

In still another possible implementation, the first modulation symbol sequence corresponds to first data, and the second time unit is used to carry retransmitted data of the first data.

In still another possible implementation, the processor 1501 is further configured to determine the second mapping mode in the plurality of mapping modes based on a second parameter and/or second mapping mode information. The second parameter includes a serial number of the second time unit or a redundancy version number of data carried in the second time unit.

In still another possible implementation, the second mapping mode information indicates at least one of an arrangement, a period, or an offset in a period of the plurality of mapping modes.

In still another possible implementation, the second mapping mode information is determined in at least one of the following manners: through presetting, by using higher layer signaling, or by using a quantity of hybrid automatic repeat request HARQ processes.

In still another possible implementation, the processor 1501 is further configured to determine the first mapping mode in the plurality of mapping modes based on a first parameter and/or first mapping mode information. The first parameter includes a serial number of the first time unit or a redundancy version number of data carried in the first time unit.

In still another possible implementation, the first mapping mode information indicates at least one of an arrangement, a period, or an offset in a period of the plurality of mapping modes.

In still another possible implementation, the first mapping mode information is determined in at least one of the following manners: through presetting, by using higher layer signaling, or by using a quantity of hybrid automatic repeat request HARQ processes.

In still another possible implementation, the higher layer signaling includes one or more of broadcast information, system information, higher layer configuration signaling, MAC layer signaling, and the like.

In still another possible implementation, the first mapping mode represents sequentially mapping the plurality of modulation symbols to the plurality of subcarriers in an order of indexes of the plurality of subcarriers.

In still another possible implementation, the serial number SN of the first time unit satisfies the following two conditions.

Condition 1:

$$\text{floor}\left(\frac{\text{SN} - \text{Offset}}{\text{Period} + 1}\right)$$

is an even number.

Herein, SN≥0, floor() is a floor function, Offset is a start offset of the serial number of the first time unit, Period indicates an arrangement period of the plurality of mapping modes, and Period>0 or Period=0.

Condition 2: SN≥Offset or SN>Offset. For each parameter, refer to the foregoing descriptions. In still another possible implementation, Condition 1 may alternatively be represented as:

$$\text{floor}\left(\frac{\text{SN} - \text{Offset}}{\text{Period} + 1}\right) \bmod 2 = 0$$

Herein, mod indicates a modulo operation.

It should be noted that the foregoing describes a case in which the start offset exists. In a specific implementation process, this application is also applicable to a case in which the start offset is not set.

The foregoing uses the floor function as an example for description. This application is also applicable to a case in which a ceiling function is used. For example, the ceiling function is ceil(), and the serial number SN of the first time unit may also satisfy the following condition:

$$\text{ceil}\left(\frac{\text{SN} - \text{Offset}}{\text{Period} + 1} - 1\right)$$

is an even number.

In still another possible implementation, the plurality of modulation symbols include N modulation symbols, and N is a natural number greater than 1. The second mapping mode represents:

mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, where L<N.

In still another possible implementation, the serial number SN2 of the second time unit satisfies the following two conditions.

Condition 1:

$$\text{floor}\left(\frac{\text{SN2} - \text{Offset2}}{\text{Period2} + 1}\right)$$

is an odd number.

Herein, SN≥0, floor() is a floor function, Offset2 is a start offset of the serial number of the second time unit, Period2 indicates an arrangement period of the plurality of mapping modes, and Period2>0 or Period2=0.

Condition 2: SN2≥Offset2 or SN2>Offset2. For each parameter, refer to the foregoing descriptions. It should be noted that the foregoing describes a case in which the start offset exists. In a specific implementation process, this application is also applicable to a case in which the start offset is not set.

In still another possible implementation, the plurality of mapping modes further include a third mapping mode. The processor 1501 is further configured to:

determine the third mapping mode in the plurality of mapping modes; and
receive, in the third mapping mode, a third modulation symbol sequence carried in a third time unit.

P modulation symbols in the third modulation symbol sequence are respectively mapped to P subcarriers in the third mapping mode. The P subcarriers belong to the subcarrier set.

The third mapping mode, the first mapping mode, and the second mapping mode represent different mapping locations of the P modulation symbols on the P subcarriers.

An embodiment of this application further provides a terminal. The terminal includes the foregoing resource mapping apparatus, for example, the resource mapping apparatus shown in FIG. 13, FIG. 14, or FIG. 15.

Optionally, the terminal may be a transportation tool or an intelligent terminal, like an intelligent cockpit product, a vehicle, an uncrewed aerial vehicle, a roadside unit, an intersection radar, or a robot.

An embodiment of this application further provides a terminal. The terminal may be an intelligent cockpit product, a vehicle, or the like. The terminal includes a first node and/or a second node. The first node (for example, a base station or an automotive cockpit domain controller CDC) includes the resource mapping apparatus described in the third aspect or any possible implementation of the third aspect. The second node (for example, one or more of modules such as a camera, a screen, a microphone, an acoustic device, a radar, an electronic key, a passive entry passive start system controller, and user equipment UE) includes the resource mapping apparatus described in the fourth aspect or any possible implementation of the fourth aspect.

Alternatively, the vehicle may be replaced with an intelligent terminal or a transportation tool, like an uncrewed aerial vehicle or a robot. The intelligent terminal may include a smart home device, a smart manufacturing device, and the like.

An embodiment of this application further provides a communication system. The communication system includes a first resource mapping apparatus and a second resource mapping apparatus. The first resource mapping apparatus is configured to implement the method at a side of the first resource mapping apparatus in the embodiment shown in FIG. 4, FIG. 6, or FIG. 8. The second resource mapping apparatus is configured to implement the method at a side of the second resource mapping apparatus in the embodiment shown in FIG. 4, FIG. 6, or FIG. 8.

An embodiment of this application further provides a communication device (or a network element). The communication device includes the foregoing resource mapping apparatus, for example, the resource mapping apparatus shown in FIG. 13, FIG. 14, or FIG. 15.

Optionally, the communication device may be a base station or the like.

An embodiment of this application further provides a computer-readable storage medium. The computer-readable storage medium stores a computer program. When the computer program runs on one or more processors, the method described in the embodiment shown in FIG. 4, FIG. 6, or FIG. 8 is implemented.

An embodiment of this application further provides a computer program product. When the computer program product runs on one or more processors, the method described in the embodiment shown in FIG. 4, FIG. 6, or FIG. 8 is implemented.

An embodiment of this application further provides a chip system. The chip system includes a communication interface and at least one processor. The communication interface is configured to provide information input/output for the at least one processor, and/or the communication interface is configured to send or receive data. The processor is configured to invoke a computer program (or a computer instruction), to implement the method described in the embodiment shown in FIG. 4, FIG. 6, or FIG. 8.

All or some of the foregoing embodiments may be implemented by software, hardware, firmware, or any combination thereof. When software is used to implement the foregoing embodiments, all or some of the foregoing embodiments may be implemented by form of a computer program product. The computer program product includes one or more computer instructions. When the computer program instructions are loaded and executed on a computer, the processes or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like.

A person of ordinary skill in the art may understand that all or some of the processes of the method in the foregoing embodiments may be implemented by a computer program instructing related hardware. The program may be stored in a computer-readable storage medium. When the program is executed, the processes of the method in the foregoing embodiments are performed. The foregoing storage medium includes any medium capable of storing program code, for example, a ROM, a random access memory RAM, a magnetic disk, or an optical disc.

### Claims

1. A resource mapping method, comprising:

determining a first mapping mode in a plurality of mapping modes, wherein the plurality of mapping modes further comprise a second mapping mode; and
mapping, by the first mapping mode, a first modulation symbol sequence carried in a first time unit, wherein a plurality of modulation symbols in the first modulation symbol sequence are respectively mapped to a plurality of subcarriers by the first mapping mode, each subcarrier is used to map one modulation symbol, and the plurality of subcarriers belong to a subcarrier set; and

the first mapping mode and the second mapping mode represent different mapping locations of the plurality of modulation symbols on the plurality of subcarriers.

2. The method according to claim 1, wherein the first mapping mode and the second mapping mode represent different mapping locations of a first modulation symbol on the plurality of subcarriers, and the first modulation symbol is R modulation symbols of the plurality of modulation symbols, wherein 0<R≤N, and N is a quantity of modulation symbols comprised in the plurality of modulation symbols.

3. The method according to claim 1 or 2, wherein the method further comprises:

   determining the second mapping mode in the plurality of mapping modes; and
   mapping, by the second mapping mode, a second modulation symbol sequence carried in a second time unit, wherein
   at least one modulation symbol in the second modulation symbol sequence is respectively mapped to at least one subcarrier by the second mapping mode, and the at least one subcarrier belongs to the subcarrier set; and
   the first mapping mode and the second mapping mode represent different mapping locations of the at least one modulation symbol on the at least one subcarrier.

4. The method according to claim 3, wherein the first modulation symbol sequence corresponds to first data, and the second time unit is used to carry retransmitted data of the first data.

5. The method according to claim 3 or 4, wherein the determining the second mapping mode in the plurality of mapping modes comprises:
   determining the second mapping mode in the plurality of mapping modes based on a second parameter and/or second mapping mode information, wherein the second parameter comprises a serial number of the second time unit or a redundancy version number of data carried in the second time unit.

6. The method according to any one of claims 1 to 5, wherein the determining a first mapping mode in a plurality of mapping modes comprises:
   determining the first mapping mode in the plurality of mapping modes based on a first parameter and/or first mapping mode information, wherein the first parameter comprises a serial number of the first time unit or a redundancy version number of data carried in the first time unit.

7. The method according to claim 5 or 6, wherein the first mapping mode information and/or the second mapping mode information indicate/indicates at least one of an arrangement, a period, or an offset in a period of the plurality of mapping modes.

8. The method according to any one of claims 5 to 7, wherein the first mapping mode information and/or the second mapping mode information are/is determined in at least one of the following manners: through presetting, by using higher layer signaling, or by using a quantity of hybrid automatic repeat request HARQ processes.

9. The method according to claim 8, wherein the higher layer signaling comprises one or more of broadcast information, system information, and higher layer configuration signaling.

10. The method according to any one of claims 1 to 9, wherein the first mapping mode represents sequentially mapping the plurality of modulation symbols to the plurality of subcarriers in an order of indexes of the plurality of subcarriers.

11. The method according to claim 10, wherein the serial number SN of the first time unit satisfies the following condition:

$$\text{floor}\left(\frac{\text{SN}-\text{Offset}}{\text{Period}+1}\right)$$

is an even number, and SN ≥ Offset, wherein
SN≥0, floor() is a floor function, Offset is a start offset of the serial number of the first time unit, Period indicates an arrangement period of the plurality of mapping modes, and Period>O or Period=0.

12. The method according to claim 10 or 11, wherein the plurality of modulation symbols comprise N modulation symbols, and N is a natural number greater than 1; and the second mapping mode represents:
mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, wherein L<N.

13. The method according to any one of claims 1 to 12, wherein the plurality of mapping modes further comprise a third mapping mode, and the method further comprises:

   determining the third mapping mode in the plurality of mapping modes; and
   mapping, in the third mapping mode, a third modulation symbol sequence carried in a third time unit, wherein P modulation symbols in the third modulation symbol sequence are respectively mapped to P subcarriers in the third mapping mode, and the P subcarriers belong to the subcarrier set; and
   the third mapping mode, the first mapping mode, and the second mapping mode represent different mapping locations of the P modulation symbols on the P subcarriers.

14. A resource mapping method, comprising:

   determining a first mapping mode in a plurality of mapping modes, wherein the plurality of mapping modes further comprise a second mapping mode; and
   receiving, based on the first mapping mode, a first modulation symbol sequence carried in a first time unit, wherein a plurality of modulation symbols in the first modulation symbol sequence are respectively mapped to a plurality of subcarriers in the first mapping mode, each subcarrier is used to map one modulation symbol, and the plurality of subcarriers belong to a subcarrier set; and
   the first mapping mode and the second mapping mode represent different mapping locations of the plurality of modulation symbols on the plurality of subcarriers.

15. The method according to claim 14, wherein the first mapping mode and the second mapping mode represent different mapping locations of a first modulation symbol on the plurality of subcarriers, and the first modulation symbol is R modulation symbols of the plurality of modulation symbols, wherein $0<R\leq N$, and N is a quantity of modulation symbols comprised in the plurality of modulation symbols.

16. The method according to claim 14 or 15, wherein the method further comprises:

   determining the second mapping mode in the plurality of mapping modes; and
   receiving, by the second mapping mode, a second modulation symbol sequence carried in a second time unit, wherein
   at least one modulation symbol in the second modulation symbol sequence is respectively mapped to at least one subcarrier by the second mapping mode, and the at least one subcarrier belongs to the subcarrier set; and
   the first mapping mode and the second mapping mode represent different mapping locations of the at least one modulation symbol on the at least one subcarrier.

17. The method according to claim 16, wherein the first modulation symbol sequence corresponds to first data, and the second time unit is used to carry retransmitted data of the first data.

18. The method according to claim 16 or 17, wherein the determining the second mapping mode in the plurality of mapping modes comprises:
determining the second mapping mode in the plurality of mapping modes based on a second parameter and/or second mapping mode information, wherein the second parameter comprises a serial number of the second time unit or a redundancy version number of data carried in the second time unit.

19. The method according to any one of claims 14 to 18, wherein the determining a first mapping mode in a plurality of mapping modes comprises:
determining the first mapping mode in the plurality of mapping modes based on a first parameter and/or first mapping mode information, wherein the first parameter comprises a serial number of the first time unit or a redundancy version number of data carried in the first time unit.

20. The method according to claim 18 or 19, wherein the first mapping mode information and/or the second mapping mode information indicate/indicates at least one of an arrangement, a period, or an offset in a period of the plurality of mapping modes.

21. The method according to any one of claims 18 to 20, wherein the first mapping mode information and/or the second mapping mode information are/is determined in at least one of the following manners: through presetting, by using higher layer signaling, or by using a quantity of hybrid automatic repeat request HARQ processes.

22. The method according to claim 21, wherein the higher layer signaling comprises one or more of broadcast information, system information, and higher layer configuration signaling.

23. The method according to any one of claims 14 to 22, wherein the first mapping mode represents sequentially mapping the plurality of modulation symbols to the plurality of subcarriers in an order of indexes of the plurality of subcarriers.

24. The method according to claim 23, wherein the serial number SN of the first time unit satisfies the following condition:

$$\text{floor}\left(\frac{SN-\text{Offset}}{\text{Period}+1}\right)$$

is an even number, and $SN \geq$ Offset, wherein
$SN \geq 0$, floor() is a floor function, Offset is a start offset of the serial number of the first time unit, Period indicates an arrangement period of the plurality of mapping modes, and Period>O or Period=0.

25. The method according to any one of claims 14 to 24, wherein the plurality of modulation symbols comprise N modulation symbols, and N is a natural number greater than 1; and the second mapping mode represents:
mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, wherein L<N.

26. The method according to any one of claims 14 to 25, wherein the plurality of mapping modes further comprise a third mapping mode, and the method further comprises:

determining the third mapping mode in the plurality of mapping modes; and
receiving, in the third mapping mode, a third modulation symbol sequence carried in a third time unit, wherein P modulation symbols in the third modulation symbol sequence are respectively mapped to P subcarriers in the third mapping mode, and the P subcarriers belong to the subcarrier set; and
the third mapping mode, the first mapping mode, and the second mapping mode represent different mapping locations of the P modulation symbols on the P subcarriers.

27. A resource mapping apparatus, comprising:

a determining unit, configured to determine a first mapping mode in a plurality of mapping modes, wherein the plurality of mapping modes further comprise a second mapping mode; and
a mapping unit, configured to map, by the first mapping mode, a first modulation symbol sequence carried in a first time unit, wherein
a plurality of modulation symbols in the first modulation symbol sequence are respectively mapped to a plurality of subcarriers by the first mapping mode, each subcarrier is used to map one modulation symbol, and the plurality of subcarriers belong to a subcarrier set; and
the first mapping mode and the second mapping mode represent different mapping locations of the plurality of modulation symbols on the plurality of subcarriers.

28. The apparatus according to claim 27, wherein the first mapping mode and the second mapping mode represent different mapping locations of a first modulation symbol on the plurality of subcarriers, and the first modulation symbol is R modulation symbols of the plurality of modulation symbols, wherein $0<R \leq N$, and N is a quantity of modulation symbols comprised in the plurality of modulation symbols.

29. The apparatus according to claim 26 or 27, wherein the determining unit is further configured to determine the second mapping mode in the plurality of mapping modes; and

the mapping unit is further configured to map, by the second mapping mode, a second modulation symbol sequence carried in a second time unit, wherein

at least one modulation symbol in the second modulation symbol sequence is respectively mapped to at least one subcarrier by the second mapping mode, and the at least one subcarrier belongs to the subcarrier set; and the first mapping mode and the second mapping mode represent different mapping locations of the at least one modulation symbol on the at least one subcarrier.

30. The apparatus according to claim 29, wherein the first modulation symbol sequence corresponds to first data, and the second time unit is used to carry retransmitted data of the first data.

31. The apparatus according to claim 29 or 30, wherein
the determining unit is further configured to determine the second mapping mode in the plurality of mapping modes based on a second parameter and/or second mapping mode information, wherein the second parameter comprises a serial number of the second time unit or a redundancy version number of data carried in the second time unit.

32. The apparatus according to any one of claims 27 to 31, wherein the determining unit is further configured to: determine the first mapping mode in the plurality of mapping modes based on a first parameter and/or first mapping mode information, wherein the first parameter comprises a serial number of the first time unit or a redundancy version number of data carried in the first time unit.

33. The apparatus according to claim 31 or 32, wherein the first mapping mode information and/or the second mapping mode information indicate/indicates at least one of an arrangement, a period, or an offset in a period of the plurality of mapping modes.

34. The apparatus according to any one of claims 31 to 33, wherein the first mapping mode information and/or the second mapping mode information are/is determined in at least one of the following manners: through presetting, by using higher layer signaling, or by using a quantity of hybrid automatic repeat request HARQ processes.

35. The apparatus according to claim 34, wherein the higher layer signaling comprises one or more of broadcast information, system information, and higher layer configuration signaling.

36. The apparatus according to any one of claims 27 to 35, wherein the first mapping mode represents sequentially mapping the plurality of modulation symbols to the plurality of subcarriers in an order of indexes of the plurality of subcarriers.

37. The apparatus according to claim 36, wherein the serial number SN of the first time unit satisfies the following condition:

$$\mathrm{floor}\left(\frac{\mathrm{SN-Offset}}{\mathrm{Period}+1}\right)$$

is an even number, and SN $\geq$ Offset, wherein
SN$\geq$0, floor() is a floor function, Offset is a start offset of the serial number of the first time unit, Period indicates an arrangement period of the plurality of mapping modes, and Period>O or Period=0.

38. The apparatus according to claim 36 or 37, wherein the plurality of modulation symbols comprise N modulation symbols, and N is a natural number greater than 1; and the second mapping mode represents:
mapping first to $L^{th}$ modulation symbols to subcarriers in an order of indexes of the subcarriers starting from an index of an $(N-L+1)^{th}$ subcarrier, and mapping $(L+1)^{th}$ to $N^{th}$ modulation symbols to subcarriers in an order of indexes of the subcarriers starting from an index of a first subcarrier, wherein L<N.

39. The apparatus according to any one of claims 27 to 38, wherein the plurality of mapping modes further comprise a third mapping mode; the determining unit is further configured to determine the third mapping mode in the plurality of mapping modes; and

the mapping unit is further configured to map, in the third mapping mode, a third modulation symbol sequence carried in a third time unit, wherein

P modulation symbols in the third modulation symbol sequence are respectively mapped to P subcarriers in the third mapping mode, and the P subcarriers belong to the subcarrier set; and

the third mapping mode, the first mapping mode, and the second mapping mode represent different mapping locations of the P modulation symbols on the P subcarriers.

40. A resource mapping apparatus, comprising:

a determining unit, configured to determine a first mapping mode in a plurality of mapping modes, wherein the plurality of mapping modes further comprise a second mapping mode; and

a demapping unit, configured to receive, based on the first mapping mode, a first modulation symbol sequence carried in a first time unit, wherein

a plurality of modulation symbols in the first modulation symbol sequence are respectively mapped to a plurality of subcarriers by the first mapping mode, each subcarrier is used to map one modulation symbol, and the plurality of subcarriers belong to a subcarrier set; and

the first mapping mode and the second mapping mode represent different mapping locations of the plurality of modulation symbols on the plurality of subcarriers.

41. The apparatus according to claim 40, wherein the first mapping mode and the second mapping mode represent different mapping locations of a first modulation symbol on the plurality of subcarriers, and the first modulation symbol is R modulation symbols of the plurality of modulation symbols, wherein $0<R \leq N$, and N is a quantity of modulation symbols comprised in the plurality of modulation symbols.

42. The apparatus according to claim 40 or 41, wherein

the determining unit is further configured to determine the second mapping mode in the plurality of mapping modes; and

the demapping unit is further configured to receive, by the second mapping mode, a second modulation symbol sequence carried in a second time unit, wherein

at least one modulation symbol in the second modulation symbol sequence is respectively mapped to at least one subcarrier by the second mapping mode, and the at least one subcarrier belongs to the subcarrier set; and

the first mapping mode and the second mapping mode represent different mapping locations of the at least one modulation symbol on the at least one subcarrier.

43. The apparatus according to claim 42, wherein the first modulation symbol sequence corresponds to first data, and the second time unit is used to carry retransmitted data of the first data.

44. The apparatus according to claim 42 or 43, wherein

the determining unit is further configured to determine the second mapping mode in the plurality of mapping modes based on a second parameter and/or second mapping mode information, wherein the second parameter comprises a serial number of the second time unit or a redundancy version number of data carried in the second time unit.

45. The apparatus according to any one of claims 40 to 44, wherein

the determining unit is further configured to determine the first mapping mode in the plurality of mapping modes based on a first parameter and/or first mapping mode information, wherein the first parameter comprises a serial number of the first time unit or a redundancy version number of data carried in the first time unit.

46. The apparatus according to claim 44 or 45, wherein the first mapping mode information and/or the second mapping mode information indicate/indicates at least one of an arrangement, a period, or an offset in a period of the plurality of mapping modes.

47. The apparatus according to any one of claims 44 to 46, wherein the first mapping mode information and/or the second mapping mode information are/is determined in at least one of the following manners: through presetting, by using higher layer signaling, or by using a quantity of hybrid automatic repeat request HARQ processes.

48. The apparatus according to claim 47, wherein the higher layer signaling comprises one or more of broadcast information, system information, and higher layer configuration signaling.

49. The apparatus according to any one of claims 40 to 48, wherein the first mapping mode represents sequentially mapping the plurality of modulation symbols to the plurality of subcarriers in an order of indexes of the plurality of subcarriers.

50. The apparatus according to claim 49, wherein the serial number SN of the first time unit satisfies the following condition:

$$\mathrm{floor}\left(\frac{\mathrm{SN-Offset}}{\mathrm{Period+1}}\right)$$

is an even number, and SN $\geq$ Offset, wherein

SN$\geq$0, floor() is a floor function, Offset is a start offset of the serial number of the first time unit, Period indicates an arrangement period of the plurality of mapping modes, and Period>O or Period=0.

51. The apparatus according to any one of claims 40 to 50, wherein the plurality of modulation symbols comprise N modulation symbols, and N is a natural number greater than 1; and the second mapping mode represents:
mapping first to L$^{th}$ modulation symbols to subcarriers in an order of indexes of the subcarriers starting from an index of an (N-L+1)$^{th}$ subcarrier, and mapping (L+1)$^{th}$ to N$^{th}$ modulation symbols to subcarriers in an order of indexes of the subcarriers starting from an index of a first subcarrier, wherein L<N.

52. The apparatus according to any one of claims 40 to 51, wherein the plurality of mapping modes further comprise a third mapping mode;

the determining unit is further configured to determine the third mapping mode in the plurality of mapping modes; and
the demapping unit is further configured to receive, in the third mapping mode, a third modulation symbol sequence carried in a third time unit, wherein
P modulation symbols in the third modulation symbol sequence are respectively mapped to P subcarriers in the third mapping mode, and the P subcarriers belong to the subcarrier set; and
the third mapping mode, the first mapping mode, and the second mapping mode represent different mapping locations of the P modulation symbols on the P subcarriers.

53. A resource mapping apparatus, wherein the resource mapping apparatus comprises at least one processor and a communication interface; and the at least one processor is configured to invoke a computer program stored in at least one memory, so that the apparatus implements the method according to any one of claims 1 to 13.

54. A resource mapping apparatus, wherein the resource mapping apparatus comprises at least one processor and a communication interface; and the at least one processor is configured to invoke a computer program stored in at least one memory, so that the apparatus implements the method according to any one of claims 14 to 26.

55. A computer-readable storage medium, wherein the computer-readable storage medium stores a computer program, and when the computer program runs on one or more processors, the method according to any one of claims 1 to 26 is implemented.

56. A computer program product, wherein when the computer program product runs on one or more processors, the method according to any one of claims 1 to 26 is implemented.

57. A terminal, wherein the terminal comprises the resource mapping apparatus according to any one of claims 27 to 52.

FIG. 1

FIG. 2

A plurality of
modulation symbols:

RB:

FIG. 3

First resource
mapping
apparatus

Second resource
mapping
apparatus

S401: Determine a first mapping mode
in a plurality of mapping modes

S402: Map, in the first mapping mode, a
first modulation symbol sequence carried
in a first time cell, where a plurality of
modulation symbols in the first
modulation symbol sequence are
respectively mapped to a plurality of
subcarriers in the first mapping mode

Radio signal

S403: Determine the first mapping mode in
the plurality of mapping modes

S404: Receive, based on the first mapping
mode, the first modulation symbol
sequence carried in the first time unit

FIG. 4

FIG. 5A

First modulation symbol sequence:

0 1 2 3 4 5 6 7 8 9 ... N−2 N−1

M subcarriers included within an available bandwidth

N of the M subcarriers

Left guard band

Subcarrier 0

Subcarrier 1

Subcarrier N−2

Subcarrier N−1

Subcarrier M−1

Right guard band

f

FIG. 5B

FIG. 5C

First resource
mapping
apparatus

Second resource
mapping
apparatus

S405: Determine a second mapping
mode in a plurality of mapping modes

S406: Map, in the second mapping
mode, a second modulation symbol
sequence carried in a second time cell,
where at least one modulation symbol in
the second modulation symbol sequence
is respectively mapped to at least one
subcarrier in the second mapping mode

Radio signal

S407: Determine the second mapping mode
in the plurality of mapping modes

S408: Receive, based on the second mapping
mode, the second modulation symbol
sequence carried in the second time cell

FIG. 6

FIG. 7A

A subcarrier set includes M subcarriers

FIG. 7B

FIG. 7C

A subcarrier set includes M subcarriers

S801: A first resource mapping apparatus determines a first mapping mode in a plurality of resource mapping modes based on a serial number of a first time cell and/or first mapping mode information

S802: The first resource mapping apparatus maps, in the first mapping mode, a first modulation symbol sequence carried in the first time cell

S803: The first resource mapping apparatus determines a second mapping mode in the plurality of resource mapping modes based on a serial number of a second time cell and/or first mapping mode information

S804: The first resource mapping apparatus maps, in the second mapping mode, a second modulation symbol sequence carried in the second time cell

FIG. 8

| | | |
|---|---|---|
| Initially transmitted<br>CBG 0<br>CB 0 to CB 4 | Retransmitted (old)<br>CBG 0<br>CB 0 to CB 4 | First data with a<br>transmission error |
| Initially transmitted<br>CBG 1<br>CB 0 to CB 4 | Initially transmitted (new)<br>CBG 1<br>CB 0 to CB 4 | |
| Initially transmitted<br>CBG 2<br>CB 0 to CB 4 | Initially transmitted (new)<br>CBG 2<br>CB 0 to CB 4 | |
| Initially transmitted<br>CBG 3<br>CB 0 to CB 4 | Initially transmitted (new)<br>CBG 3<br>CB 0 to CB 4 | |
| Initially transmitted<br>CBG 4<br>CB 0 to CB 4 | Initially transmitted (new)<br>CBG 4<br>CB 0 to CB 4 | |
| Initially transmitted<br>CBG 5<br>CB 0 to CB 4 | Initially transmitted (new)<br>CBG 5<br>CB 0 to CB 4 | |
| Initially transmitted<br>CBG 6<br>CB 0 to CB 4 | Initially transmitted (new)<br>CBG 6<br>CB 0 to CB 4 | |
| Initially transmitted<br>CBG 7<br>CB 0 to CB 4 | Initially transmitted (new)<br>CBG 7<br>CB 0 to CB 4 | |

Superframe 1                    Superframe 2

FIG. 9

| | DCI #0 | DCI #1 | DCI #2 | DCI #3 | DCI #4 | DCI #5 | DCI #6 | DCI #7 |
|---|---|---|---|---|---|---|---|---|
| | The DCI indicates that all CBGs are initially transmitted | The DCI indicates CBG hybrid retransmission | The DCI indicates CBG hybrid retransmission | The DCI indicates CBG hybrid retransmission | The DCI indicates CBG hybrid retransmission | The DCI indicates CBG hybrid retransmission | The DCI indicates CBG hybrid retransmission | The DCI indicates CBG hybrid retransmission |
| CBG 0 | Initially transmitted TB 0 | Initially transmitted TB 1 | Initially transmitted TB 2 | Retransmitted TB 2 | Initially transmitted TB 4 | Retransmitted TB 4 | Initially transmitted TB 6 | Retransmitted TB 6 |
| CBG 1 | Initially transmitted TB 0 | Retransmitted TB 0 | Initially transmitted TB 2 | Initially transmitted TB 3 | Initially transmitted TB 4 | Initially transmitted TB 5 | Retransmitted TB 5 | Initially transmitted TB 7 |
| CBG 2 | Initially transmitted TB 0 | Retransmitted TB 0 | Retransmitted TB 0 | Retransmitted TB 0 | Retransmitted TB 0 | Retransmitted TB 0 | Retransmitted TB 0 | Retransmitted TB 0 |
| CBG 3 | Initially transmitted TB 0 | Retransmitted TB 0 | Retransmitted TB 0 | Initially transmitted TB 3 | Initially transmitted TB 4 | Retransmitted TB 4 | Retransmitted TB 4 | Initially transmitted TB 7 |
| CBG 4 | Initially transmitted TB 0 | Initially transmitted TB 1 | Retransmitted TB 1 | Initially transmitted TB 3 | Retransmitted TB 3 | Initially transmitted TB 5 | Retransmitted TB 5 | Initially transmitted TB 7 |
| CBG 5 | Initially transmitted TB 0 | Initially transmitted TB 1 | Retransmitted TB 1 | Retransmitted TB 1 | Initially transmitted TB 4 | Retransmitted TB 4 | Initially transmitted TB 6 | Retransmitted TB 6 |
| CBG 6 | Initially transmitted TB 0 | Initially transmitted TB 1 | Initially transmitted TB 2 | Retransmitted TB 2 | Retransmitted TB 2 | Initially transmitted TB 5 | Initially transmitted TB 6 | Initially transmitted TB 7 |
| CBG 7 | Initially transmitted TB 0 | Initially transmitted TB 1 | Initially transmitted TB 2 | Initially transmitted TB 3 | Retransmitted TB 3 | Initially transmitted TB 5 | Initially transmitted TB 6 | Initially transmitted TB 7 |
| Serial number of a time cell | Superframe 0 | Superframe 1 | Superframe 2 | Superframe 3 | Superframe 4 | Superframe 5 | Superframe 6 | Superframe 7 |
| Mapping mode | First mapping mode | Second mapping mode | First mapping mode | Second mapping mode | First mapping mode | Second mapping mode | First mapping mode | Second mapping mode |

FIG. 10

64QAM, R=0.7646, moving speed 0.19 m/s of a fading channel, RMS=10 ns, a quantity of retransmission times unlimited, and the fading channel

FIG. 11A

64QAM, R=0.7646, moving speed 0.19 m/s of a fading channel, RMS=10 ns, a quantity of retransmission times unlimited, and the fading channel

FIG. 11B

| Quantity of HARQ processes | Period of mapping modes | Mapping mode | First mapping mode | Second mapping mode | First mapping mode | Second mapping mode | First mapping mode | Second mapping mode | First mapping mode | Second mapping mode |
|---|---|---|---|---|---|---|---|---|---|---|
| 1 | 2 | Superframe serial number | Superframe 0 | Superframe 1 | Superframe 2 | Superframe 3 | Superframe 4 | Superframe 5 | Superframe 6 | Superframe 7 |
| | | HARQ process number | HARQ 0 | HARQ 0 | HARQ 0 | HARQ 0 | HARQ 0 | HARQ 0 | HARQ 0 | HARQ 0 |

FIG. 12(a)

| Quantity of HARQ processes | Period of mapping modes | Mapping mode | First mapping mode | First mapping mode | Second mapping mode | Second mapping mode | First mapping mode | First mapping mode | Second mapping mode | Second mapping mode |
|---|---|---|---|---|---|---|---|---|---|---|
| 2 | 4 | Superframe serial number | Superframe 0 | Superframe 1 | Superframe 2 | Superframe 3 | Superframe 4 | Superframe 5 | Superframe 6 | Superframe 7 |
| | | HARQ process number | HARQ 0 | HARQ 1 | HARQ 0 | HARQ 1 | HARQ 0 | HARQ 1 | HARQ 0 | HARQ 1 |

FIG. 12(b)

| Quantity of HARQ processes | Period of mapping modes | Mapping mode | First mapping mode | First mapping mode | First mapping mode | Second mapping mode | Second mapping mode | Second mapping mode | First mapping mode | First mapping mode |
|---|---|---|---|---|---|---|---|---|---|---|
| 3 | 6 | Superframe serial number | Superframe 0 | Superframe 1 | Superframe 2 | Superframe 3 | Superframe 4 | Superframe 5 | Superframe 6 | Superframe 7 |
| | | HARQ process number | HARQ 0 | HARQ 1 | HARQ 2 | HARQ 0 | HARQ 1 | HARQ 2 | HARQ 0 | HARQ 1 |

FIG. 12(c)

| Quantity of HARQ processes | Period of mapping modes | Mapping mode | First mapping mode | First mapping mode | First mapping mode | First mapping mode | Second mapping mode | Second mapping mode | Second mapping mode | Second mapping mode |
|---|---|---|---|---|---|---|---|---|---|---|
| 4 | 8 | Superframe serial number | Superframe 0 | Superframe 1 | Superframe 2 | Superframe 3 | Superframe 4 | Superframe 5 | Superframe 6 | Superframe 7 |
| | | HARQ process number | HARQ 0 | HARQ 1 | HARQ 2 | HARQ 3 | HARQ 0 | HARQ 1 | HARQ 2 | HARQ 3 |

FIG. 12(d)

EP 4 283 907 A1

130

Resource mapping apparatus

1301

1302

| Determining unit | Mapping unit |

FIG. 13

140

Resource mapping apparatus

1401

1402

| Determining unit | Demapping unit |

FIG. 14

FIG. 15

## INTERNATIONAL SEARCH REPORT

| International application No. |
|---|
| **PCT/CN2022/076349** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CNKI; WPABS; 3GPP: 映射, 方式, 不同, 位置, 子载波, 重传, 时间, 调制, 符号, 集合, map, mode, different, position, sub-carrier, retransmission, time, modulate, symbol, set

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110637425 A (QUALCOMM INC.) 31 December 2019 (2019-12-31) description, paragraphs [0064]-[0092] | 1-57 |
| X | CN 1917418 A (BEIJING SAMSUNG TELECOM R&D CENTER et al.) 21 February 2007 (2007-02-21) claims 1-31 | 1-57 |
| X | CN 101005342 A (HUAWEI TECHNOLOGIES CO., LTD.) 25 July 2007 (2007-07-25) description page 10 line 1- page 11 line 3 | 1-57 |
| A | CN 109196936 A (BEIJING XIAOMI MOBILE SOFTWARE CO., LTD.) 11 January 2019 (2019-01-11) entire document | 1-57 |
| A | US 2019132171 A1 (LIMBERG ALLEN LEROY) 02 May 2019 (2019-05-02) entire document | 1-57 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 March 2022** | **30 March 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2022/076349**

| Patent document cited in search report | | | Publication date (day/month/year) | Patent family member(s) | | | Publication date (day/month/year) |
|---|---|---|---|---|---|---|---|
| CN | 110637425 | A | 31 December 2019 | TW | 201902167 | A | 01 January 2019 |
| | | | | US | 2018331788 | A1 | 15 November 2018 |
| | | | | US | 10958379 | B2 | 23 March 2021 |
| | | | | WO | 2018208841 | A1 | 15 November 2018 |
| | | | | KR | 20200006560 | A | 20 January 2020 |
| | | | | KR | 102264719 | B1 | 11 June 2021 |
| | | | | EP | 3622643 | A1 | 18 March 2020 |
| | | | | JP | 2020520167 | A | 02 July 2020 |
| | | | | SG | 11201909222 Y | A | 28 November 2019 |
| | | | | BR | 112019023388 | A2 | 16 June 2020 |
| CN | 1917418 | A | 21 February 2007 | None | | | |
| CN | 101005342 | A | 25 July 2007 | CN | 101005342 | B | 28 July 2010 |
| CN | 109196936 | A | 11 January 2019 | WO | 2020029088 | A1 | 13 February 2020 |
| US | 2019132171 | A1 | 02 May 2019 | None | | | |

Form PCT/ISA/210 (patent family annex) (January 2015)

**EP 4 283 907 A1**

**Patent documents cited in the description**

- CN 202110189750